# EUROPEAN PATENT APPLICATION

(11) **EP 4 310 491 A1**
(43) Date of publication of application: **24.01.2024**
(21) Application number: 22771177.7
(22) Date of filing: 08.03.2022
(51) Int. Cl.: G01N 27/82

(54) **INFORMATION PROCESSING METHOD, PROGRAM, INFORMATION PROCESSING DEVICE, AND MODEL GENERATION METHOD**

(30) Priority: 16.03.2021 JP 2021042847; 16.03.2021 JP 2021042848
(71) Applicant: Sumitomo Chemical Company Limited, Tokyo 103-6020 (JP)
(72) Inventor: YOSHIDA, Nobuyuki, Niihama-shi, Ehime 792-8521 (JP); TADA, Toyokazu, Ichihara-shi, Chiba 299-0195 (JP)
(74) Representative: Vossius & Partner Patentanwälte Rechtsanwälte mbB
(86) International application number: PCT/JP2022/009901
(87) International publication number: WO 2022/196425

(57) **Abstract**

Provided is an information processing method and the like which are capable of appropriately estimating a state of a magnetic tube. In the information processing method, a computer executes processing of acquiring measurement data obtained by measuring magnetic characteristic values of a magnetic tube, and processing of estimating wall thickness information by inputting the acquired measurement data to a model trained for estimating the wall thickness information relating to the wall thickness of the magnetic tube in a case where the measurement data is input. Preferably, the magnetic characteristic values are measurement values measured by using an inspection probe including a magnet that generates a magnetic field, a yoke that is disposed on an opposite side of the magnetic tube with respect to the magnet, and a magnetic sensor that is disposed between the yoke and the magnetic tube and measures a magnetic flux density passing through the yoke, the magnet, and the magnetic tube, and is an output voltage of the magnetic sensor that becomes lower as the magnetic flux density is larger.

## Description

### [Technical Field]

The present invention relates to an information processing method, a program, an information processing device, and a model generation method.

### [Background Art]

As a method for inspecting defects such as thickness reduction in a magnetic tube in a non-destructive manner, remote field eddy current testing (RFECT), magnetic flux leakage (MFL), and the like are known.

For example, Patent Document 1 discloses a method of measuring defects in a magnetic member by magnetic flux resistance (MFR).

### [Prior Art Document]

### [Patent Document]

[Patent Document 1] Japanese Patent No. 6514592

### [Summary of Invention]

### [Problems to be Solved by Invention]

By the way, in the inspection methods, the wall thickness and the like of the magnetic tube are predicted by applying a measurement value to a model formula prepared in advance. Therefore, it is necessary to manually create a model formula for predicting the wall thickness and the like.

An object of an aspect is to provide an information processing method capable of suitably estimating a state of a magnetic tube, and the like.

### [Means for Solving Problems]

According to an aspect, there is provided an information processing method of causing a computer to execute: processing of acquiring measurement data obtained by measuring magnetic characteristic values of a magnetic tube; and processing of estimating wall thickness information by inputting the acquired measurement data to a model trained for estimating the wall thickness information relating to the wall thickness of the magnetic tube in a case where the measurement data is input.

### [Effects of Invention]

In the aspect, it is possible to suitably estimate the state of the magnetic tube.

### [Brief Description of Drawings]

FIG. 1 is an explanatory view illustrating a configuration example of a defect estimation system.
FIG. 2A is an explanatory view relating to a measurement device.
FIG. 2B is an explanatory view relating to the measurement device.
FIG. 3 is a block diagram illustrating a configuration example of a server.
FIG. 4 is a block diagram illustrating a configuration example of a terminal.
FIG. 5 is an explanatory view showing an example of a record layout of a user DB, a model DB, and a measurement DB.
FIG. 6 is an explanatory view illustrating an overview of Embodiment 1.
FIG. 7 is an explanatory view relating to data expansion processing.
FIG. 8 is an explanatory view relating to measurement data correction processing.
FIG. 9 is an explanatory view relating to image conversion processing.
FIG. 10 is a flowchart illustrating a procedure of processing of generating estimation model.
FIG. 11 is a flowchart illustrating a procedure of processing of estimating wall thickness information.
FIG. 12 is an explanatory view illustrating an overview of Modification Example 1.
FIG. 13 is a flowchart illustrating a procedure of processing of generating an estimation model according to Modification Example 1.
FIG. 14 is a flowchart illustrating a procedure of processing of estimating wall thickness information according to Modification Example 1.
FIG. 15 is an explanatory view illustrating an overview of Modification Example 2.
FIG. 16 is a flowchart illustrating a procedure of processing of generating an estimation model according to Modification Example 2.
FIG. 17 is a flowchart illustrating a procedure of processing of estimating wall thickness information according to Modification Example 2.
FIG. 18 is an explanatory view illustrating an overview of Modification Example 3.
FIG. 19 is a view illustrating learning weighting in Modification Example 3.
FIG. 20 is a flowchart illustrating a procedure of processing of generating an estimation model according to Modification Example 3.
FIG. 21 is a flowchart illustrating a procedure of processing of estimating wall thickness information according to Modification Example 3.
FIG. 22 is an explanatory view illustrating an influence of a hall element voltage in accordance with disturbance of a magnetic flux in an MFR method.
FIG. 23A is an explanatory view illustrating an overview of a dynamic time warping method in Modification Example 4.
FIG. 23B is an explanatory view illustrating an overview of the dynamic time warping method in Modification Example 4.
FIG. 24 is a view illustrating a detection voltage and estimated wall thickness information in Modification Example 4.
FIG. 25 is an explanatory view relating to data expansion processing in Modification Example 5.
FIG. 26 is an explanatory view illustrating an example of a measurement data upload screen.
FIG. 27 is an explanatory view illustrating an example of a wall thickness information display screen.
FIG. 28 is a flowchart illustrating a procedure of processing of estimating wall thickness information according to Embodiment 2.

### [Mode for Carrying out Invention]

Hereinafter, the invention will be described on the basis of the accompanying drawings illustrating embodiments of the invention.

### (Embodiment 1)

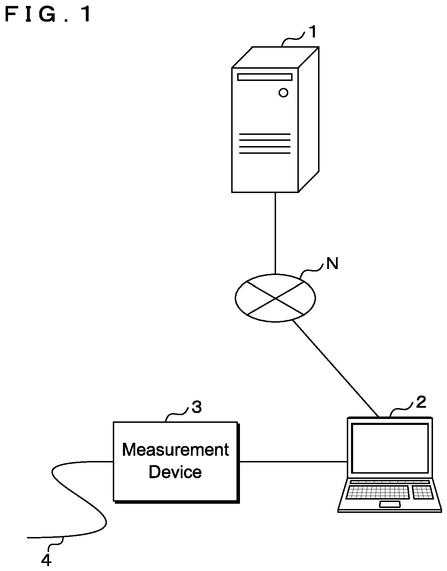

FIG. 1 is an explanatory view illustrating a configuration example of a defect estimation system. In this embodiment, description will be given of a defect estimation system that estimates defects such as thickness reduction from measurement data obtained by measuring a magnetic characteristic value of a magnetic tube by using a machine learning model. The defect estimation system includes an information processing device 1, a user terminal 2, a measurement device 3, and an inspection probe 4. The information processing device 1 and the user terminal 2 are connected for communication through a network N such as the Internet.

For example, the magnetic tube that is set as a measurement target in this embodiment is a tube material formed from a magnetic substance such as carbon steel, ferritic stainless steel, two-phase stainless steel including a ferrite phase and an austenite phase. Note that, the carbon steel and the like are examples of the magnetic substance, and a member (magnetic substance) that forms the magnetic tube is not limited thereto.

The measurement device 3 is a measurement device that measures a magnetic characteristic value of the magnetic tube, and is a device configured to perform thickness reduction inspection on the magnetic tube by using magnetic flux resistance suggested by an applicant of the invention. The measurement device 3 measures a magnetic characteristic value (magnetic flux density) at respective positions inside the magnetic tube by inserting the inspection probe 4 into the magnetic tube and by moving the inspection probe 4 through the inside of the tube. As the measurement device 3, for example, detect measurement devices disclosed in Japanese Patent No. 6579840, Japanese Patent No. 6514592, and Japanese Patent Laid-Open Publication No. 2019-100850 can be employed.

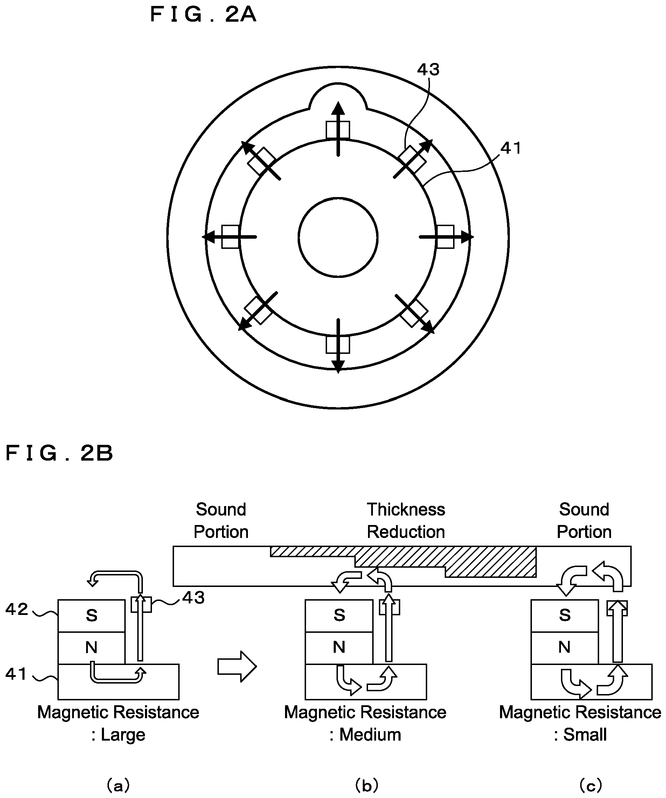

FIGS. 2A and 2B are explanatory views relating to the measurement device 3. FIG. 2A is a cross-sectional view orthogonal to a longitudinal direction (axial direction) of the magnetic tube, and conceptually illustrates the cross-sectional view of the magnetic tube into which the inspection probe 4 is inserted. FIG. 2B is a cross-sectional view orthogonal to a lateral direction (radial direction) of the magnetic tube, and conceptually illustrates an aspect of measuring a magnetic flux density of a defect site (hereinafter, referred to as "thickness reduction portion") of the magnetic tube in which thickness reduction appears. The magnetic flux resistance will be simply described on the basis of FIGS. 2A and 2B.

The inspection probe 4 includes a yoke 41, a magnet 42, and a hall element 43 (magnetic sensor). The yoke 41 is a hollow cylindrical magnetic member, and is a high magnetic permeability metal such as carbon steel. Note that, the shape of the yoke 41 is not limited to the hollow cylindrical shape, and may be, for example, a rod shape, a plate shape, a circular column shape, or the like.

The magnet 42 and the hall element 43 are attached along an outer peripheral surface of the yoke 41 at equal intervals. For example, the magnet 42 and the hall element 43 are provided at eight sites on the outer periphery of the yoke 41. The magnet 42 is disposed so that one magnetic pole faces the yoke 41 and the other magnetic pole faces the magnetic tube, and is polarized in a direction facing the magnetic tube.

As indicated by an arrow in FIGS. 2A and 2B, the yoke 41 and the magnet 42 constitute a magnetic circuit. The hall element 43 is provided on the magnetic circuit, and outputs an output voltage proportional to a magnetic flux density passing through the hall element 43. Specifically, the hall element 43 outputs a higher output voltage as the magnetic resistance decreases and the magnetic flux density passing through the hall element 43 increases.

Specifically, as illustrated in (a) of FIG. 2B, in a state in which the magnet 42 and the hall element 43 are disposed at the outside of the magnetic tube, since the magnetic resistance is large, the magnetic flux density decreases, and thus the output voltage of the hall element 43 is low. On the other hand, as illustrated in (c) of FIG. 2B, in a state in which the magnet 42 and the hall element 43 are disposed at a sound portion (portion where thickness reduction does not occur), since the magnetic resistance is small, the magnetic flux density increases, and thus the output voltage of the hall element 43 is high. As illustrated in (b) of 2B, in a state in which the magnet 42 and the hall element 43 are disposed at a thickness reduction portion, since the thickness of the magnetic tube is smaller in comparison to the sound portion, the magnetic resistance is large and the magnetic flux density is small. Accordingly, the output voltage of the hall element 43 is low.

As described above, the measurement device 3 measures the magnitude of the magnetic flux density on the basis of the magnitude of the output voltage of the hall element 43. The output voltage of the hall element 43 varies in correspondence with the wall thickness of the magnetic tube, and becomes lower as the thickness reduction occurs.

The magnetic flux resistance has a characteristic in that inspection time per one magnetic tube is shorter in comparison to an internal rotary inspection system (IRIS) using ultrasonic waves, and a plurality of magnetic tubes can be inspected. In addition, as an inspection method using magnetism as in the magnetic flux resistance, there are a remote field method (RFECT), magnetic flux leakage (MFL), and the like, but in these measurement methods, measurement accuracy is lower in comparison to the magnetic flux resistance.

In this embodiment, when estimating the wall thickness of the magnetic tube from measurement data by the magnetic flux resistance, the wall thickness is estimated by using machine learning model.

Note that, examples of the inspection probe 4 according to the magnetic flux resistance, as shown in FIG. 2B, include a P-type in which a gap exists between the yoke 41 and the hall element 43 (Japanese Patent No. 6514592), and a PR-type in which the yoke 41 and the hall element 43 are in close contact with each other without a gap between the yoke 41 and the hall element 43 (Japanese Patent Laid-Open Publication No. 2019-100850). In both the types, the output voltage is proportional to the magnetic flux density, but in the P-type, the output voltage becomes lower as the magnetic resistance is larger, and in the PR-type, the output voltage becomes higher as the magnetic resistance is larger. The measurement principle of the magnetic flux resistance has been described with reference to the P-type as an example for simplification of explanation, but in the following embodiment, description will be given of a case where measurement is performed by using the PR-type inspection probe 4. Of course, either the P-type or the PR-type may be used.

In addition, in this embodiment, description will be given on the assumption that measurement data is measurement data obtained by the magnetic flux resistance, but the measurement data is not limited thereto. For example, as the measurement data, an eddy current value measured by RFECT may be used. In addition, as the measurement data, a leaked magnetic flux (magnetic flux passing through the thickness reduction portion) measured by MFL may be used. That is, the measurement data may be a value representing a magnetic characteristic of the magnetic tube, and is not limited to the measurement data obtained by the magnetic flux resistance.

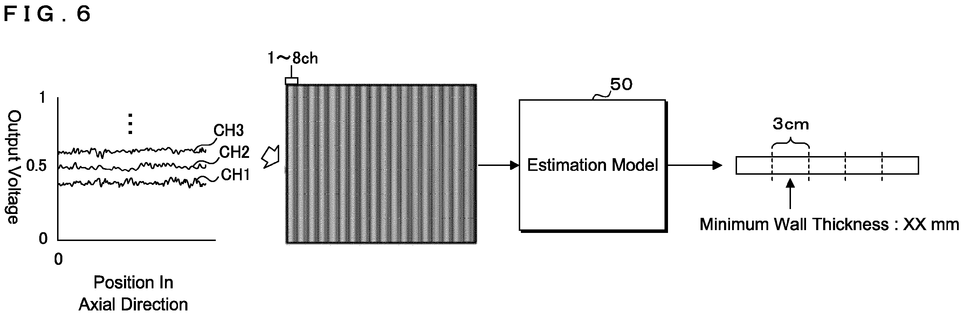

Returning to FIG. 1, description will be continued. The information processing device 1 is an information processing device capable of performing various kinds of information processing and capable of transmitting and receiving information, and examples thereof include a server computer, a personal computer, and the like. In this embodiment, the information processing device 1 is assumed as the server computer and is referred to as a server 1 for simplification. The server 1 learns predetermined training data and generates an estimation model 50 (refer to FIG. 6) that estimates wall thickness information relating to the wall thickness of the magnetic tube in a case where measurement data of a magnetic characteristic value of the magnetic tube is input. Then, the server 1 acquires the measurement data of the magnetic tube that is a measurement target from the user terminal 2, and inputs the measurement data to the estimation model 50 to estimate wall thickness information of the magnetic tube. As to be described later, the wall thickness information is the wall thickness (thickness) of the magnetic tube, but may be a thickness reduction width, a thickness reduction rate, a thickness reduction range, or the like of the magnetic tube in addition to the wall thickness.

The user terminal 2 is a terminal device that is used by a user of this system, and examples thereof include a personal computer, a tablet terminal, and the like. Hereinafter, the user terminal 2 will be referred to as a terminal 2 for simplification. For example, the user of this system is an inspection company that performs non-destructive inspection of the magnetic tube, but there is no particular limitation. Note that, in FIG. 1, one piece of the terminal 2 is illustrated, but it is assumed that a plurality of terminals 2, 2, 2, ... of a plurality of users are connected to the server 1. The terminal 2 is connected to the measurement device 3, measurement data of the magnetic tube which is measured by the measurement device 3 is transmitted to the server 1, and wall thickness information estimated on the basis of the estimation model 50 is acquired from the server 1.

Note that, in this embodiment, it is assumed that the server 1 on a cloud estimates the wall thickness information based on the estimation model 50, but this embodiment is not limited thereto. For example, a local terminal 2 may install data of the estimation model 50 from the server 1 in advance, and may input the measurement data acquired from the measurement device 3 to the estimation model 50 to estimate the wall thickness information. In this manner, a device that generates the estimation model 50 and a device that estimates the wall thickness information based on the estimation model 50 may be different from each other.

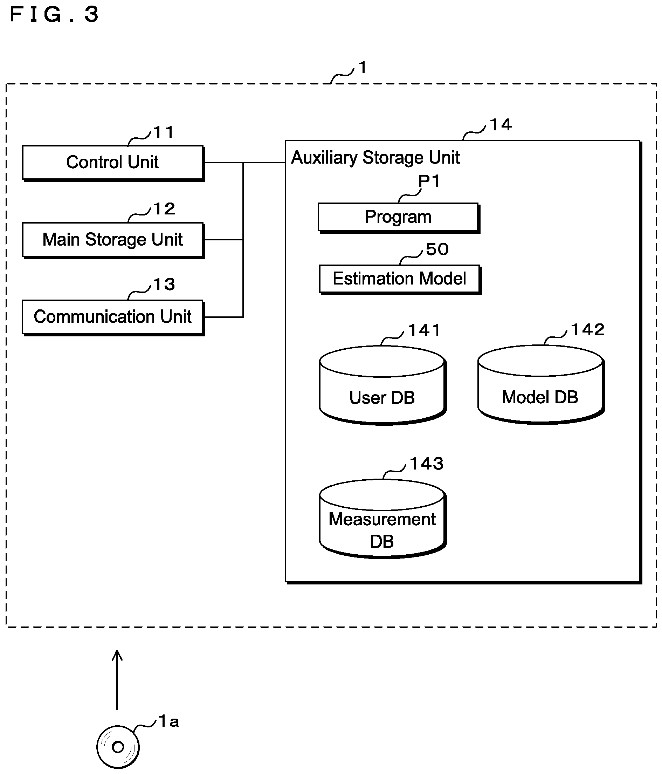

FIG. 3 is a block diagram illustrating a configuration example of the server 1. The server 1 includes a control unit 11, a main storage unit 12, a communication unit 13, and an auxiliary storage unit 14. The control unit 11 includes one or a plurality of arithmetic operation processing devices such as a central processing unit (CPU), a micro-processing unit (MPU), and a graphics processing unit (GPU), and reads out and executes a program P1 stored in the auxiliary storage unit 14 to carry out various kinds of information processing. The main storage unit 12 is a temporary storage region such as a static random access memory (SRAM), a dynamic random access memory (DRAM), and a flash memory, and temporarily stores data necessary for the control unit 11 to execute information processing. The communication unit 13 is a communication module for performing processing relating to communication, and the communication unit 13 transmits and receives information to and from the outside.

The auxiliary storage unit 14 is a non-volatile storage region such as a large-capacity memory, and a hard disk, and stores the program P1 necessary for the control unit 11 to execute processing, and other pieces of data. In addition, the auxiliary storage unit 14 stores the estimation model 50, a user DB 141, a model DB 142, and a measurement DB 143. The estimation model 50 is a machine learning model that has learned predetermined training data, and is a model that estimates wall thickness information relating to the wall thickness of the magnetic tube in a case where measurement data obtained by measuring a magnetic characteristic value of the magnetic tube is input. It is assumed that the estimation model 50 is used as a program module that constitutes a part of artificial intelligence software.

The user DB 141 is a database that stores information of a user of this system. The model DB 142 is a database that stores information of each of a plurality of the estimation models 50 prepared in correspondence with a thickness reduction aspect (a shape pattern of a thickness reduction portion), dimensions of the magnetic tube, and the like. As to be described later, in this embodiment, the plurality of estimation models 50 are prepared in correspondence with the thickness reduction aspect, the dimensions, and the like of the magnetic tube set as an estimation target. The measurement DB 143 is a database that stores measurement data of the magnetic tube which is acquired from the terminal 2.

Note that, the auxiliary storage unit 14 may be an external storage device that is connected to the server 1. In addition, the server 1 may be a multi-computer constituted by a plurality of computers, or may be a virtual machine that is virtually constructed by software.

In addition, in this embodiment, the server 1 is not limited to the above-described configuration, and may include, for example, an input unit that accepts an operation input, a display unit that displays an image, and the like. In addition, the server 1 may be provided with a reading unit that reads a non-temporary computer-readable recording medium 1a and may read out the program P1 from the recording medium 1a. In addition, the program P1 may be executed on a single computer, or may be executed on a plurality of computers connected to each other through the network N.

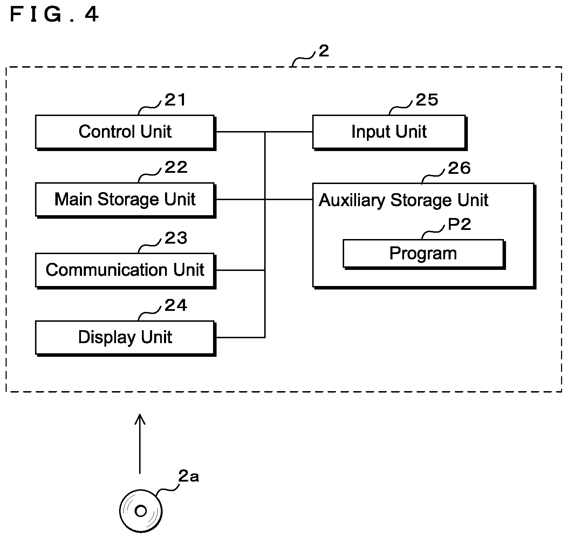

FIG. 4 is a block diagram illustrating a configuration example of the terminal 2. The terminal 2 includes a control unit 21, a main storage unit 22, a communication unit 23, a display unit 24, an input unit 25, and an auxiliary storage unit 26. The control unit 21 is one or a plurality of arithmetic operation processing devices such as a CPU and an MPU, and reads out and executes a program P2 stored in the auxiliary storage unit 26 to carry out various kinds of information processing. The main storage unit 22 is a temporary storage region such as a RAM, and temporarily stores data necessary for the control unit 21 to execute information processing. The communication unit 23 is a communication module for performing processing relating to communication, and the communication unit 23 transmits and receives information to and from the outside.

The display unit 24 is a display screen such as a liquid crystal monitor, and displays an image. The input unit 25 is an operation interface such as a keyboard and a mouse, and accepts an operation input from a user. The auxiliary storage unit 26 is a non-volatile storage region such as a large-capacity memory, and a hard disk, and stores the program P2 necessary for the control unit 21 to execute processing, and other pieces of data.

Note that, the terminal 2 may be provided with a reading unit that reads a non-temporary computer-readable recording medium 2a and may read out the program P2 from the recording medium 2a. In addition, the program P2 may be executed on a single computer, or may be executed on a plurality of computers connected to each other through the network N.

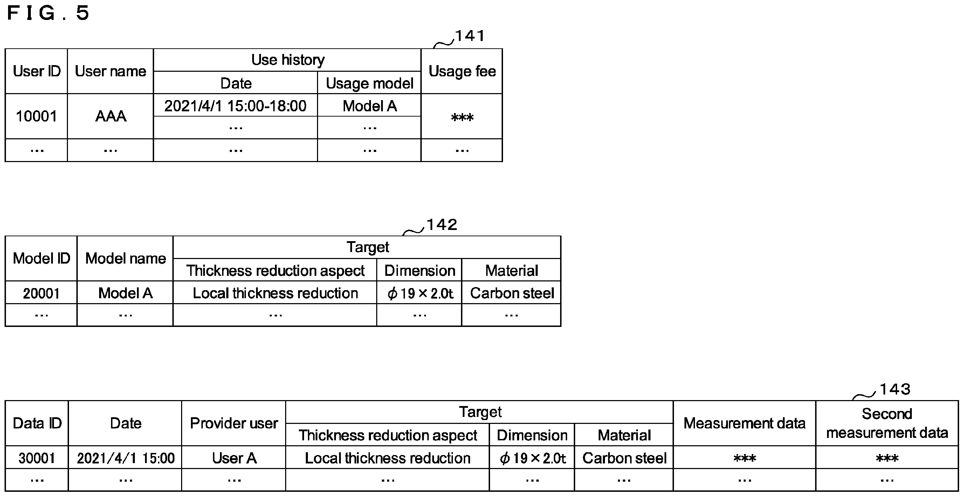

FIG. 5 is an explanatory view illustrating an example of a record layout of the user DB 141, the model DB 142, and the measurement DB 143. The user DB 141 includes a user ID column, a user name column, a use history column, and a usage fee column. The user ID column stores a user ID for identifying each user. The user name column, the use history column, and the usage fee column respectively store, in association with the user ID, a user name, a use history (an estimation history of wall thickness information) of the estimation model 50 by a user, and a usage fee (system usage fee) of the estimation model 50 which is determined in correspondence with the use history. Details of the usage fee will be described in Embodiment 2.

The model DB 142 includes a model ID column, a model name column, and a target column. The model ID column stores a model ID for identifying each estimation model 50 prepared in correspondence with a thickness reduction aspect and the like of the magnetic tube. The model name column and the target column respectively store a model name of the estimation model 50 and magnetic tube information relating to the magnetic tube that becomes an estimation target. For example, a thickness reduction aspect, dimensions, and a material of the magnetic tube are stored in the target column.

The measurement DB 143 includes a data ID column, a date column, a provider user column, a target column, a measurement data column, and a second measurement data column. The data ID column stores a data ID for identifying measurement data provided from each user. The date column, the provider user column, the target column, the measurement data column, and the second measurement data column respectively store, in association with the data ID, a measurement data providing date (acquisition date), a user name of a providing source user, magnetic tube information (a thickness reduction aspect and the like) relating to the magnetic tube that becomes a measurement target, measurement data of the magnetic tube, and second measurement data. The second measurement data is wall thickness measurement data of the magnetic tube which is different from the measurement data obtained by the magnetic flux resistance in a measurement method, and is measurement data obtained, for example, by internal rotary inspection system (IRIS). Details of the second measurement data will be described in Embodiment 2.

FIG. 6 is an explanatory view illustrating an overview of Embodiment 1. FIG. 6 conceptually illustrates an aspect in which the wall thickness of each portion of the magnetic tube is estimated in a case where measurement data of a magnetic characteristic value of the magnetic tube, which is measured by the measurement device 3 (inspection probe 4), is input to the estimation model 50. The overview of this embodiment will be described on the basis of FIG. 6.

As described above, the server 1, by learning predetermined training data, generates the estimation model 50 that estimates wall thickness information in a case where measurement data of a magnetic characteristic value is input. The estimation model 50 according to this embodiment is a neural network generated by deep learning, and is, for example, a convolutional neural network (CNN, ResNet, or the like).

Note that, the estimation model 50 may be a neural network other than the CNN. In addition, as in Modification Examples 1 and 2 to be described later, the estimation model 50 may be a model such as k-nearest neighbor algorithm (kNN), support vector machine (SVM), random forest, and decision tree based on a learning algorithm other than the neural network.

In the estimation model 50 according to this embodiment, measurement data that is measured by using the measurement device 3 and is based on the magnetic flux resistance is set as an input. As described above, the measurement data is a value obtained by measuring a magnetic flux density passing through a magnetic circuit formed by the yoke 41 and the magnet 42 provided in the inspection probe 4, and the magnetic tube by using the hall element 43, and is an output voltage of the hall element 43 proportional to the magnetic flux density.

When performing measurement on the magnetic tube, a user inserts the inspection probe 4 from an opening of the magnetic tube, and moves (sweeps) the inspection probe 4 to an opening on an opposite side. According to this, a magnetic characteristic value at each position of the magnetic tube along a longitudinal direction is measured. As described above, a plurality of the hall elements 43 are attached to the yoke 41 of the inspection probe 4, and the measurement device 3 measures magnetic characteristic values of respective positions on a cross-section orthogonal to the longitudinal directions at the respective positions in the longitudinal direction. Specifically, the plurality of hall elements 43 are periodically attached onto the outer periphery of the cylindrical yoke 41, and the measurement device 3 measures the magnetic characteristic values at respective positions where the cross-section of the cylindrical magnetic tube is equally divided along a peripheral direction.

Note that, in this embodiment, description is made on the assumption that the magnetic tube is a cylindrical tube, but a cross-sectional shape of the magnetic tube is not limited to a circular shape, and may be, for example, a rectangular shape or the like. That is, the measurement device 3 may be capable of measuring the magnetic characteristic values of the respective positions on the cross-section orthogonal to the longitudinal direction of the magnetic tube by using the plurality of hall elements 43 provided in the inspection probe 4, and the "respective positions on the cross-section" is not limited to the respective positions where the cross-section of the cylindrical magnetic tube is equally divided along the peripheral direction.

In the following description, each of the hall elements 43 functioning as a magnetic sensor is appropriately referred to as "channel", and channel numbers are allocated to the hall elements 43 and are described as "CH1", "CH2", "CH3", ..., and "CH8".

As described above, when performing measurement on the magnetic tube, as illustrated in the left side of FIG. 6, waveform data of a magnetic characteristic value (output voltage) of each channel continuous along the longitudinal direction of the magnetic tube is observed. Note that, the horizontal axis of the waveform data represents a position of the magnetic tube in the longitudinal direction (axial direction), and the vertical axis represents an output voltage of the hall element 43. The server 1 uses the waveform data as an input to the estimation model 50.

The estimation model 50 outputs (estimates) wall thickness information of the magnetic tube in a case where the measurement data is input. Specifically, the estimation model 50 estimates the wall thickness (thickness) of the magnetic tube.

In this embodiment, a problem handled by the estimation model 50 is defined as a classification problem, and the estimation model 50 classifies the wall thickness of the magnetic tube per a predetermined length (for example, per 0.1 mm) in a predetermined numerical value range (for example, 1.0 to 2.3 mm). Note that, it goes without saying that the estimation model 50 may be a regression model.

In addition, in this embodiment, it is assumed that the estimation model 50 estimates the wall thickness of the magnetic tube, but this embodiment is not limited thereto. For example, instead of the wall thickness of the magnetic tube, the estimation model 50 may estimate a thickness reduction width obtained by subtracting the wall thickness of a thickness reduction portion from the wall thickness of a sound portion. In addition, for example, the estimation model 50 may estimate a thickness reduction rate obtained by dividing the wall thickness of the thickness reduction portion by the wall thickness of the sound portion. In addition, for example, the estimation model 50 may estimate a position of the thickness reduction portion in the magnetic tube, a thickness reduction range (a width of the thickness reduction portion along a longitudinal direction and/or a peripheral direction), a thickness reduction aspect (a shape pattern of thickness reduction), and the like.

In addition, in this embodiment, the thickness reduction of the magnetic tube is set as an estimation target, but this embodiment is not limited thereto, and a wall thickness increase due to rust or the like may be set as the estimation target.

As described above, the wall thickness information output from the estimation model 50 may be information relating to the wall thickness of the magnetic tube. The wall thickness information that is estimated is not limited to the wall thickness of the magnetic tube, and a defect that is set as an estimation target is not limited to thickness reduction.

For example, the estimation model 50 estimates the wall thickness of the magnetic tube for every portion obtained by dividing the magnetic tube per a certain length along the longitudinal direction. A wall thickness estimation result is conceptually illustrated on a left side in FIG. 6. The estimation model 50 partitions the magnetic tube per a certain length (for example, 3 cm) and estimates a minimum value of the wall thickness of each portion. Note that, the estimation model 50 may continuously estimate the wall thickness without partitioning the magnetic tube per a certain length, or may estimate a value (for example, a maximum value, an average value, or the like of the wall thickness of each portion) other than the minimum value. In addition, the estimation model 50 may estimate a maximum value of the wall thickness for every channel, or may estimate a minimum value of the wall thickness of all channels as a representative value.

Note that, in the above description, it is assumed that a magnetic characteristic value at each position (each channel) on a cross-section at each position of the magnetic tube in a longitudinal direction is input to the estimation model 50, but this embodiment is not limited thereto. For example, the server 1 may be configured to input only a magnetic characteristic value at a single position (cross-section) of the magnetic tube in the longitudinal direction to the estimation model 50 to estimate the wall thickness information at the position. In addition, for example, the server 1 may be configured to input only a magnetic characteristic value at a single position (channel) on the cross-section of the magnetic tube to the estimation model 50 to estimate the wall thickness information at the position.

With respect to a measurement data group for training, the server 1 generates the estimation model 50 by using training data with which a correct value (label) of the wall thickness information is associated. The measurement data for training is actual measurement data of one or a plurality of magnetic tube obtained by performing measurement with the measurement device 3, and waveform data of each channel which is obtained by measuring a magnetic characteristic value at respective position in the longitudinal direction. Specifically, the measurement data for training is data measured by inserting the inspection probe 4 from both ends of the magnetic tube while changing a relative position of the inspection probe 4 in a peripheral direction so that CH1 becomes approximately 0°, 90°, 180°, and 270° with any radial direction (position on the cross-section) set to 0°. That is, the measurement data for training is data obtained by performing eight (4 × 2) measurements per one magnetic tube. The correct value is data obtained by measuring the wall thickness of the magnetic tube by using a 3D shape measurement device, and is data obtained by measuring the wall thickness per approximately 23 µm at a pitch of 0.2 mm from a tube end of the magnetic tube. With respect to the measurement data for training, the server 1 generates the estimation model 50 by using training data to which a correct value of the wall thickness of each portion is applied.

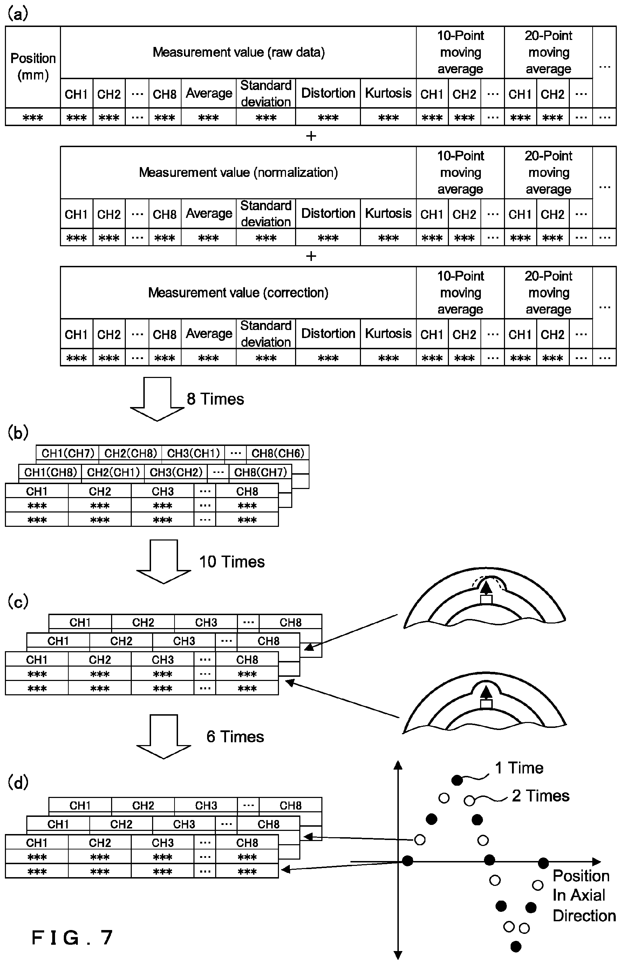

FIG. 7 is an explanatory view relating to data expansion processing. The server 1 may use only raw measurement data measured by the inspection probe 4 as an input to the estimation model 50, but in this embodiment, the raw measurement data is subjected to certain preprocessing, and the preprocessed measurement data is used as an input to the estimation model 50 in order to improve estimation accuracy of the wall thickness information. In addition, the server 1 may be configured to learn only the above-described training data (actual measurement data), but in this embodiment, the measurement data for training (actual measurement data) is expanded to increase the number of pieces of learning data. The server 1 learns the expanded training data and generates the estimation model 50. (a) to (d) of FIG. 7 conceptually illustrates an aspect in which the preprocessed measurement data is expanded.

(a) of FIG. 7 conceptually shows preprocessed data in which summary statistics such as an average value and a standard deviation are added to the measurement data for training, and data obtained by normalizing and correcting a magnetic characteristic value is added to the measurement data for training. The measurement data preprocessing will be described on the basis of FIG. 7.

The server 1 uses a position in the longitudinal direction where the magnetic characteristic value is measured, and a raw measurement value of respective channels ("CH1", "CH2", ..., and "CH8" in (a) of FIG. 7) as the raw measurement data. Note that, the reason why not only the measurement value and the position in the longitudinal direction is as follows. Since an output voltage of the hall element 43 changes intensely at the tube end (inlet) of the magnetic tube, a position of a tube end is also set as an explanatory variable. With respect to the raw measurement data, first, the server 1 normalizes a magnetic characteristic value of each channel so that a magnetic characteristic value at the outside of the magnetic tube (in the air) which becomes a maximum value, and a magnetic characteristic value at a sound portion which becomes a minimum value match each other in all channels (at all positions along a peripheral direction) (middle state in (a) of FIG. 7). Specifically, the server 1 performs correction so that an output voltage of the hall element 43 at the outside of the magnetic tube becomes 1 V, and an output voltage at the sound portion becomes 0 V. Note that, in the P-type, the magnetic characteristic value becomes the minimum at the outside of the magnetic tube and becomes the maximum at the sound portion. When the magnetic characteristic value is normalized, it is possible to correct a variation in sensitivity specific to each hall element 43, and it is possible to correct an influence of a temperature on the hall element 43.

Next, the server 1 corrects measurement data of each channel in order to minimize an influence of lift-off of the inspection probe 4 (and an overall thickness reduction portion) (a lower stage in (a) of FIG. 7).

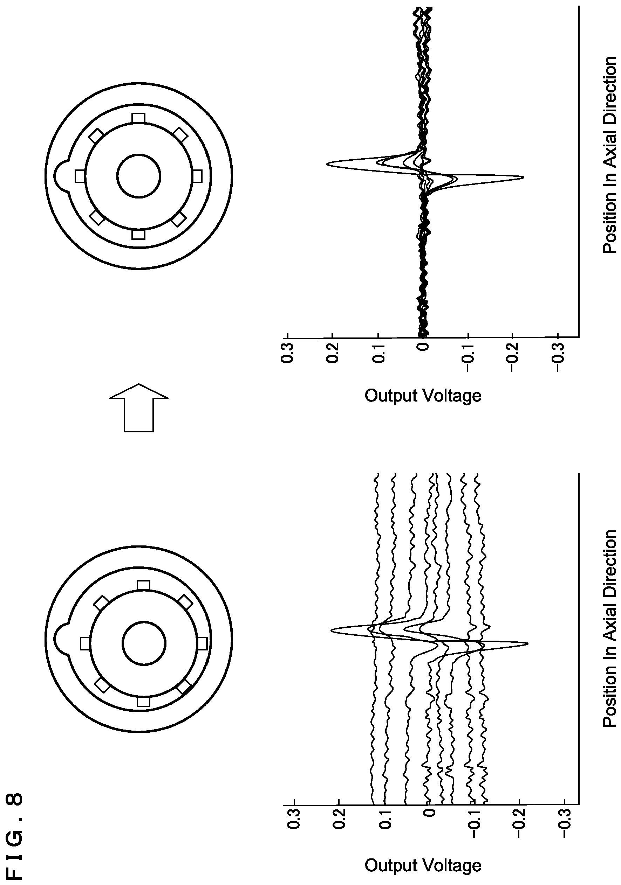

FIG. 8 is an explanatory view relating to measurement data correction processing. Measurement data before correction is illustrated on a left side in FIG. 8, and measurement data after correction is illustrated on a right side in FIG. 8. In measurement, it is preferable that the inspection probe 4 passes through a central axis of the magnetic tube, but actually, as illustrated on the left side in FIG. 8, a position of the inspection probe 4 inside the magnetic tube depends on user's operation and intervals between respective channels CH1, CH2, CH3, ..., and a tube wall may be different in many cases. Therefore, the server 1 minimizes the influence of lift-off by correcting the magnetic characteristic value of each channel to data when it is assumed that the inspection probe 4 passes through the central axis of the magnetic tube.

Specifically, the server 1 smooths the measurement data by taking a moving average in the longitudinal direction for every channel, and specifies base lines of respective channels. In addition, the server 1 corrects values of respective channels so that average values of base lines of the respective channels match each other. In other words, the server 1 adjusts a height of a waveform so that waveform shapes of the respective smoothed channels approximately match each other. Note that, a length in the longitudinal direction and the number of times of averaging when taking the moving average are adjusted in correspondence with the length (total length) of the magnetic tube.

Further, the server 1 appropriately corrects the measurement data to data of only a local thickness reduction portion by removing data of a portion where an output voltage changes gently, that is, the overall thickness reduction portion from the measurement data. Note that, the overall thickness reduction portion represents a portion where a change in the output voltage (magnetic characteristic value) of the hall element 43 is equal to or less than a certain value. For example, the server 1 obtains an average value of the base lines of all channels to specify a range in the longitudinal direction where the overall thickness reduction portion exists, and substitutes an output voltage in the range with a value (that is, 0 V) of the sound portion to remove data of the overall thickness reduction portion. According to this, a voltage change of the overall thickness reduction portion is cut out, and thus adjustment to data of only the local thickness reduction portion (portion where a change in the output voltage is equal to or more than a certain value) can be performed.

Returning to FIG. 7, description will be continued. As described above, the server 1 generates data obtained by normalizing the raw measurement data, and corrected data from which an influence of lift-off (and the overall thickness reduction portion) is removed. The server 1 may use only the normalized data and/or the corrected data as an input to the estimation model 50, but in this embodiment, all of three kinds of data including the raw measurement data, the normalized data, and the corrected data are used as the input.

The server 1 uses data obtained by adding predetermined summary statistics to each of the three kinds of data for the estimation model 50. The summary statistics include an average value, a standard deviation, the degree of distortion, and/or kurtosis, but the summary statistics are not limited thereto. The server 1 calculates the average value, the standard deviation, the degree of distortion, and/or the kurtosis along the longitudinal direction and/or the peripheral direction from a magnetic characteristic value at each position in the longitudinal direction and/or the peripheral direction, and adds the calculated values to data.

That is, the server 1 calculates the average value, the standard deviation, the degree of distortion, and the kurtosis at each position (channel) along the peripheral direction of the magnetic tube, and adds the calculated values to data. In addition, the server 1 calculates a moving average, a moving standard deviation, the degree of moving distortion, and moving kurtosis at a plurality of positions (for example, 10 points, 20 points, 30 points, 40 points, and 50 points) along the longitudinal direction of the magnetic tube, and adds the calculated values to data. In a table in FIG. 7, "average value", "standard deviation", "the degree of distortion", and "kurtosis" correspond to summary statistics in the peripheral direction, and "10-point moving average" and "20-point moving average" correspond to the summary statistics (moving average) in the longitudinal direction. In FIG. 7, the moving standard deviation, the degree of moving distortion, and the moving kurtosis are not illustrated for convenience of explanation. When adding these summary statistics, the estimation accuracy of the wall thickness information can be improved. Particularly, according to research by inventors of the present application, when adding the degree of distortion and the kurtosis, an estimation error can be reduced.

As described above, the server 1 performs certain preprocessing on raw measurement data, and the preprocessed measurement data is used as an input to the estimation model 50. Final preprocessed measurement data become matrix data of N rows × 275 columns (N represents the number of measurement points along the longitudinal direction). Actually, as in a case where the wall thickness information is estimated from the measurement data of the magnetic tube by the estimation model 50, the server 1 performs preprocessing on measurement data acquired from the terminal 2, and the preprocessed data is input to the estimation model 50.

In learning, the server 1 expands the measurement data shown in (a) of FIG. 7 in order to increase the number of pieces of learning data. As first data expansion processing, the server 1 generates a plurality of patterns of measurement data by shifting positions on the cross-section of the magnetic tube of which magnetic characteristic values are measured along the peripheral direction. Specifically, the server 1 generates measurement data by shifting channel numbers of measurement data of respective channels. First data expansion processing is conceptually shown in (b) of FIG. 7. First, the server 1 shifts the channel numbers by one, and generates measurement data in which data of CH1 is set to CH2, and data of CH2 is set to CH3, ..., and data of CH8 is set to CH1. Next, the server 1 shifts the channel numbers by two, and generates measurement data in which data of CH1 is set to CH3, data of CH2 is set to CH4, ..., and data of CH8 is set to CH2. Similarly, the server 1 shifts the channel numbers and increases the number of data by eight times. According to this, measurement data in a case of detecting a thickness reduction portion with CH2, measurement data in a case of detecting a thickness reduction portion with CH3, ... can be generated on the basis of measurement data in a case of detecting a thickness reduction portion with CH1, and it is possible to correct a deviation of a channel (a position on a cross-section of the magnetic tube) where the thickness reduction portion is detected.

Next, as second data expansion processing, the server 1 generates a plurality of patterns of measurement data by adding a plurality of patterns of predetermined noise to the measurement data. The second data expansion processing is shown in (c) of FIG. 7. For example, the server 1 adds 10 patterns of Gaussian noise (an average: 0, and a variance: 0.02) to the measurement data to increase the number of data by 10 times. According to this, as illustrated on a right side in (c) of FIG. 7, as in a case where a thickness reduction portion is located between one channel and another channel, it is possible to reproduce a minute positional deviation of the thickness reduction portion and it is possible to cause the estimation model 50 to learn the positional deviation.

As third data expansion processing, the server 1 generates measurement data in which a sampling rate when measuring a magnetic characteristic value is changed. The third data expansion processing is shown in (d) of FIG. 7. With respect to measurement data for training, the server 1 performs linear interpolation between two points continuous in the longitudinal direction, and approximates a magnetic characteristic value at a position between the two points. For example, the server 1 generates data subjected to one-point interpolation, two-point interpolation, ..., and 20 points interpolation in order to generate measurement data in which the sampling rate is one time to six times. According to this, it is possible to reproduce a variation in movement speed (sweep speed) of the inspection probe 4, and it is possible to cause the estimation model 50 to learn the variation.

Note that, in tables in (b) to (d) of FIG. 7, only measurement values ("CH1", "CH2", ...) of respective channels are shown for convenience, but it goes without saying that data is expanded to include the above-described summary statistics and the like.

The server 1 expands the number of data of the measurement data by 480 (8 × 10 × 6) times by performing the first expansion processing to the third expansion processing. According to this, it is possible to increase the number of learning data, and it is possible to cause the estimation model 50 to learn a deviation of a channel, a minute positional deviation of the thickness reduction portion, a variation of a movement speed, and the like.

Returning to FIG. 6, description will be continued. The server 1 generates the estimation model 50 by using the measurement data after expansion as training data. The server 1 may set the measurement data (magnetic characteristic value) as an input to the estimation model 50, but in this embodiment, the measurement data is converted into an image, and the image is set as an input to the estimation model 50 as illustrated in FIG. 6.

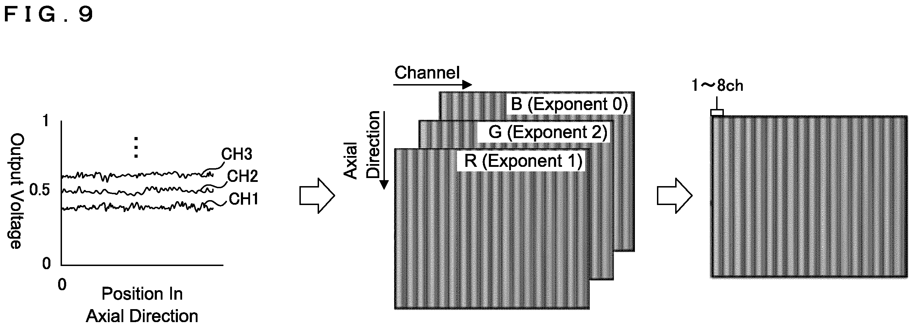

FIG. 9 is an explanatory view relating to image conversion processing. In FIG. 9, an aspect of converting the measurement data into an image is illustrated. In this embodiment, the server 1 generates an image in which magnetic characteristic values at respective positions in the magnetic tube are expressed as pixel values of respective pixels, and uses the image as an input to the estimation model 50.

Specifically, the server 1 generates an image in which the magnetic characteristic values at the respective positions are expressed as colors (for example, RGB) of the respective pixels. In the image, the vertical axis (first axis) of the image corresponds to a position of the magnetic tube in a longitudinal direction, and the horizontal axis corresponds to a position on a cross-section of the magnetic tube which is orthogonal to the longitudinal direction, that is, a channel. For example, the server 1 divides measurement data (refer to FIG. 7) in a matrix type in which respective positions of the magnetic tube along the longitudinal direction are expressed in a row, and raw measurement values of respective channels, normalized values, corrected values, and summary statistics are expressed in a column per predetermined number of rows (for example, per 224 rows). In addition, the server 1 allocates measurement data at each position to each pixel in the image by sequentially storing measurement data at first to 224th rows, measurement data at 225th to 448th rows, ... from a left end of the image. Finally, in a case where there is a remainder in a pixel in the image, the server 1 sets values of R, G, and B of a remaining portion to zero. Not that, most of the values may be zero depending on the sampling rate at the time of the third data expansion.

The server 1 generates a hue image of respective hues of R, G, and B from measurement data for training, and generates a final input image by synthesizing respective hue images. Specifically, the server 1 calculates exponentiation values of a plurality of patterns of magnetic characteristic values which are different in an exponent from the measurement data, and allocates the exponentiation values of the respective patterns to respective hues to generate respective hue images.

For example, with respect to magnetic characteristic values at respective positions in the magnetic tube, the server 1 calculates a value with an exponent of 0, a value with an exponent of 1, and a square value. In addition, the server 1 allocates respective exponentiation values to R, G, and B. FIG. 9 illustrates a case where the value with an exponent of 1 is allocated to R, the square value is allocated to G, and the value with an exponent of 0 is allocated to B. The server 1 generates respective hue images by storing the exponentiation values of the magnetic characteristic values at respective positions as pixel values of pixels corresponding to the positions. The server 1 synthesizes the respective hue images and generates a final input image.

In the following description, the image obtained by synthesizing the respective hue images will be referred to as "synthetic image".

Note that, the above-described image converting method is illustrative only, and this embodiment is not limited thereto. For example, the server 1 may generate the synthetic image by allocating a value with an exponent of 0 to a value with an exponent of 4 to respective hues by setting a final synthetic image as a CMYK image instead of the RGB image. In addition, hues to which the exponentiation values are allocated are not limited to original colors (RGB). In addition, the exponents of the exponentiation values are not limited to natural numbers, and may be real numbers (for example, an exponent of 1.5) other than the natural numbers. In addition, the server 1 may generate a monochromatic image in which magnetic characteristic values at respective positions in the magnetic tube are stored in respective pixels without calculating the exponentiation values. In addition, the server 1 may express the magnetic characteristic values as other pixel values (for example, gray scales) instead of colors. In this manner, the server 1 may generate images to which pixel values of respective pixels are allocated in correspondence with magnetic characteristic values at respective positions in the magnetic tube, and a generation method thereof is not particularly limited.

In learning, the server 1 generates a synthetic image with respect to all combinations when allocating respective exponentiation values to respective hues in order to prevent over-learning due to hues. That is, the server 1 generates six patterns of synthetic images such as a synthetic image in which the value with an exponent of 0 is allocated to G, the value with an exponent of 1 is allocated to B, and the square value is allocated to R, a synthetic image in which the value with an exponent of 0 is allocated to B, the value with an exponent of 1 is allocated to R, and the square value is allocated to G, ... in addition to the synthetic image in which the value with an exponent of 0 is allocated to R, the value with an exponent of 1 is allocated to G, and the square value is allocated to B. The server 1 causes the estimation model 50 to learn the synthetic images of respective combinations, thereby preventing over-learning due to hues.

Returning to FIG. 6, description will be continued. The server 1 performs data expansion with respect to respective pieces of measurement data given for training, and converts the respective pieces of measurement data after expansion into a synthetic image. Then, the server 1 generates the estimation model 50 by using each synthetic image and a correct value of wall thickness information corresponding to the synthetic image as the training data.

That is, the server 1 acquires an estimation value of wall thickness information by inputting a synthetic image for training to the estimation model 50, and compares the estimation value and a correct value. The server 1 updates parameters such as a weight between neurons so that the estimation value and the correct value approximate each other. The server 1 performs sequential learning by using each pair of the synthetic image and the correct value, and finally generates the estimation model 50 in which the weight and the like are optimized.

In this embodiment, the server 1 learns measurement data in correspondence with the magnetic tube that becomes a measurement target in measurement data for training, and generates a plurality of the estimation models 50 corresponding to various magnetic tubes. Specifically, the server 1 learns the measurement data separately in correspondence with magnetic tube information relating to the magnetic tube that is a measurement target, and generates the plurality of estimation models 50 corresponding to the magnetic tube information.

The magnetic tube information is information representing a state or an attribute of the magnetic tube, and examples thereof include a thickness reduction aspect, dimensions, and a material of the magnetic tube. Note that, the pieces of magnetic tube information are illustrative only, and may be other pieces of information. The thickness reduction aspect is a state of the thickness reduction portion of the magnetic tube, and is defined by a shape pattern of the thickness reduction portion (for example, whether a cross-sectional shape of the thickness reduction portion is a rectangular shape, hemispherical shape, or the like). The dimensions are defined by a diameter and a length of the magnetic tube. The material is defined by the kinds of a magnetic substance that forms the magnetic tube.

The server 1 learns the training data separately in correspondence with the pieces of magnetic tube information, and generates the estimation model 50 corresponding to the thickness reduction aspect, the dimensions, and the like of the magnetic tube. Note that, in this embodiment, it is assumed that a plurality of the estimation models 50 are generated, but the wall thickness information may be estimated by a single estimation model 50 by causing the one estimation model 50 to learn the training data regardless of a difference in the magnetic tube information.

Actually, in a case of estimating the wall thickness information by using the estimation model 50, the server 1 acquires measurement data of the magnetic tube which is measured by a user from the terminal 2, and inputs the measurement data to the estimation model 50 to estimate the wall thickness information. Specifically, the server 1 acquires the measurement data, and accepts a designation input of the magnetic tube information relating to the magnetic tube that is a measurement target from a user though the terminal 2. The server 1 selects any one among a plurality of the estimation models 50 in correspondence with designated magnetic tube information. The server 1 generates hue images of respective hues from the acquired measurement data, and generates a synthetic image obtained by synthesizing the hue images. The server 1 inputs the synthetic image to the selected estimation model 50 to estimate the wall thickness of respective portions obtained by partitioning the magnetic tube per a certain length along the longitudinal direction by inputting. The server 1 returns the estimated wall thickness information to the terminal 2 and displays the information on the terminal 2.

Note that, details of an operation (display screen and the like) of the terminal 2 when estimating the wall thickness information will be described in Embodiment 2.

As described above, according to this embodiment, it is possible to appropriately estimate the thickness reduction state (wall thickness information) of the magnetic tube by using the estimation model 50, and it is possible to present a user with the thickness reduction state.

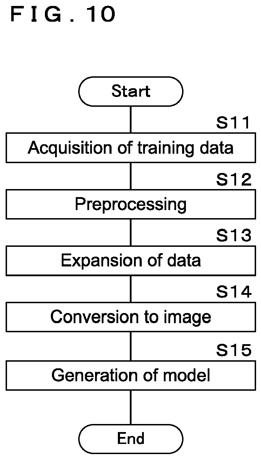

FIG. 10 is a flowchart illustrating a procedure of processing of generating the estimation model 50. Processing contents for generating the estimation model 50 by machine learning will be described on the basis of FIG. 10. The control unit 11 of the server 1 acquires training data associated with a correct value of wall thickness information relating to the wall thickness of the magnetic tube with respect to a measurement data group obtained by measuring magnetic characteristic values of the magnetic tube (step S11). The measurement data is data obtained by performing measurement on respective positions on a cross-section orthogonal to the longitudinal direction (respective positions where a cross-section of a cylindrical magnetic tube is equally divided along a peripheral direction) at the respective positions of the magnetic tube along the longitudinal direction. The magnetic characteristic value is a measurement value measured by using the inspection probe 4 including the magnet 42 that generates a magnetic field, the yoke 41 that is disposed on an opposite side of the magnetic tube with respect to the magnet 42, and the hall element 43 (magnetic sensor) that is disposed between the yoke 41 and the magnetic tube and measures a magnetic flux density passing through the yoke 41, the magnet 42, and the magnetic tube, and is an output voltage of the hall element 43 which is proportional to the magnetic flux density. For example, the wall thickness information is the wall thickness (thickness) of respective portions obtained by partitioning the magnetic tube per certain length along the longitudinal direction.

The control unit 11 performs preprocessing with respect to the measurement data for training (step S12). Specifically, the control unit 11 normalizes the magnetic characteristic values so that a magnetic characteristic value at the outside of the magnetic tube, and a magnetic characteristic value at a sound portion match each other in respective channels. In addition, the control unit 11 specifies base lines of respective channels by taking a moving average of the magnetic characteristic values along the longitudinal direction, and by making average values of the base lines of the respective channels match each other, thereby correcting the magnetic characteristic values to magnetic characteristic values in a case where the inspection probe 4 passes through the central axis of the magnetic tube. In addition, the control unit 11 adds summary statistics such as an average value and a standard deviation to the measurement data.

The control unit 11 expands the number of data of the measurement data (step S13). Specifically, the control unit 11 shifts channel numbers of data measured in respective channels to generate a plurality of patterns of measurement data. In addition, the control unit 11 adds a plurality of patterns of predetermined noise (Gaussian noise or the like) to the measurement data to generate a plurality of patterns of measurement data. In addition, the control unit 11 performs linear interpolation between two points continuous in the longitudinal direction to generate a plurality of patterns of measurement data.

The control unit 11 converts the measurement data of which the number of data is expanded into an image in which the vertical axis (first axis) of the image is set to a position along the longitudinal direction, the horizontal axis (second axis) is set to a position on a cross-section, and pixels values of respective pixels are allocated in correspondence with magnetic characteristic values at respective position inside the magnetic tube (step S14). Specifically, the control unit 11 calculates exponentiation values of a plurality of patterns of magnetic characteristic values which are different in an exponent, allocates the exponentiation values to hues different from each other, and generates hue images of respective hues. In addition, the control unit 11 generates a synthetic image obtained by synthesizing the respective hue images. The control unit 11 generates the synthetic image with respect to all combinations when allocating respective exponentiation values to respective hues, and sets the synthetic image as training data.

The control unit 11 generates the estimation model 50 that estimates wall thickness information in a case where the measurement data is input on the basis of the generated synthetic image and a correct value of the wall thickness information (step S15). For example, the control unit 11 generates a neural network such as CNN as the estimation model 50. The control unit 11 inputs the synthetic image generated in step S14 to the estimation model 50 to acquire an estimation value of the wall thickness information, and compares the acquired estimation value and the correct value to optimize parameters such as the weight of the estimation model 50 so that the estimation value and the correct value approximate each other. The control unit 11 terminates a series of processing.

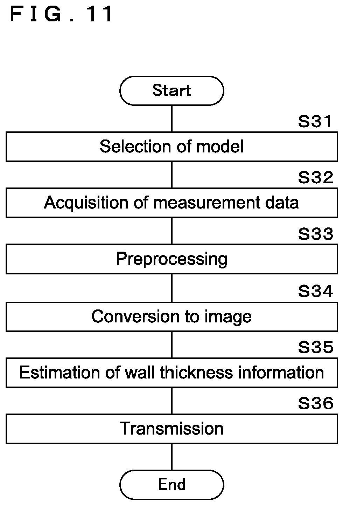

FIG. 11 is a flowchart illustrating a procedure of processing of estimating the wall thickness information. Processing contents for estimating the wall thickness information by using the estimation model 50 will be described on the basis of FIG. 11. The control unit 11 of the server 1 accepts a selection input of the estimation model 50 that is used for estimation of the wall thickness information from the terminal 2 (step S31). Specifically, the control unit 11 accepts a designation input for designating a thickness reduction aspect, dimensions, and a material of the magnetic tube. The control unit 11 selects the estimation model 50 corresponding to the designated magnetic tube information.

The control unit 11 acquires measurement data of the magnetic tube from the terminal 2 (step S32). The control unit 11 performs preprocessing with respect to the acquired measurement data (step S33). The control unit 11 converts the measurement data after the preprocessing into an image (step S34). Specifically, the control unit 11 allocates exponentiation values of the magnetic characteristic values which are different in an exponent to respective hues, and generates a synthetic image obtained by synthesizing respective hue images.

The control unit 11 inputs the image converted in step S34 to the estimation model 50 to estimate wall thickness information of the magnetic tube (step S35). For example, the control unit 11 estimates the wall thickness of respective portions obtained by partitioning the magnetic tube per a certain length along the longitudinal direction. The control unit 11 transmits the estimated thickness information to the terminal 2 (step S36), and terminates a series of processing.

As described above, according to Embodiment 1, it is possible to appropriately estimate a state of the magnetic tube.

### (Modification Example 1)

In Embodiment 1, description has been given of an aspect in which the measurement data of the magnetic tube is converted into an image, and the image is input to the estimation model 50. In Modification Example 1, description will be given of an aspect in which the original measurement data is used as is as an input to the estimation model 50. Note that, the same reference numerals will be given to redundant contents as in Embodiment 1, and description thereof will be omitted.

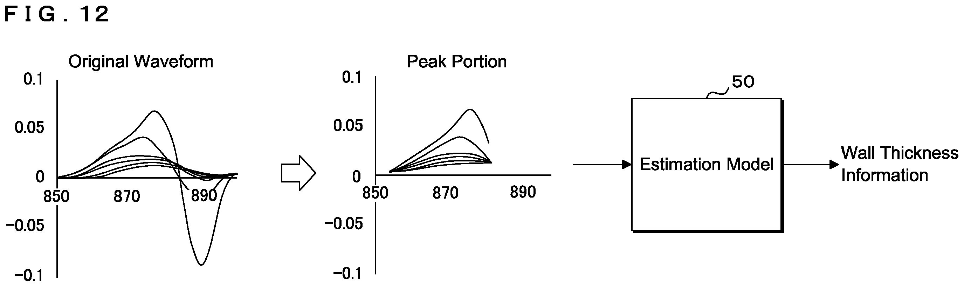

FIG. 12 is an explanatory view illustrating an overview of Modification Example 1. FIG. 12 illustrates an aspect in which data of a peak portion corresponding to a thickness reduction portion is extracted from measurement data of the magnetic tube, and the data of the peak portion is input to the estimation model 50 to estimate wall thickness information. The overview of this modification example will be described on the basis of FIG. 12.

In this modification example, the server 1 constructs a model that can handle original measurement data (a magnetic characteristic value at each position inside the magnetic tube) as is instead of an image as the estimation model 50. For example, the server 1 constructs a model according to k-nearest neighbor algorithm (kNN) as the estimation model 50.

Note that, in this modification example, description will be given on the assumption that the estimation model 50 is a model according to kNN, but the estimation model 50 may be a model that can handle original measurement data, and may be, for example, SVM, random forest, linear classifier, or the like.

The server 1 generates the estimation model 50 on the basis of the same training data as in Embodiment 1. Note that, it is preferable that the server 1 performs main component analysis or the like on the measurement data for training to reduce the number of dimensions. When reducing the number of dimensions of the measurement data that is input to the estimation model 50, it is possible to reduce a processing load of the server 1. Note that, a user may arbitrarily select whether or not to perform reduction of the number of dimensions (main component analysis).

Here, the server 1 may input magnetic characteristic values at all positions along the longitudinal direction to the estimation model 50 as is, but in this embodiment, only measurement data of a part is extracted and is set as an input to the estimation model 50. Specifically, the server 1 extracts data of a peak portion corresponding to thickness reduction portion, and the data is set as an input to the estimation model 50.

FIG. 12 illustrates an aspect of extracting data of the peak portion from original measurement data. The server 1 extracts data of a portion where an output voltage varies, that is, data of the peak portion from a waveform of the output voltage of the hall element 43 which corresponds to the measurement data.

A method of extracting data of the peak portion is not particularly limited, and for example, the server 1 specifies a base line (flat waveform) by taking a moving average of an output voltage, and specifies the peak portion in correspondence with the base line. Specifically, the server 1 specifies a portion where a difference from the base line is equal to or more than a predetermined threshold value as the peak portion. Note that, as illustrated in FIG. 12, in a case where the hall element 43 reaches a thickness reduction portion, the output voltage rises to a positive value and then falls to a negative value, but in this modification example, only a portion where the output voltage is a positive value and a waveform is convex upward is specified as the peak portion.

The server 1 extracts data of the specified peak portion from measurement data of the entirety of the magnetic tube, and sets the data as an input to the estimation model 50. According to this, it is possible to appropriately estimate wall thickness information of the thickness reduction portion while reducing the amount of data to be processed by the estimation model 50.

Note that, extraction of data of the peak portion in this modification example may be applied to Embodiment 1, only the data of the peak portion may be converted into an input image, and the input image may be used as an input to the estimation model 50 according to Embodiment 1.

The server 1 extracts data of the peak portion from measurement data for training, and generates the estimation model 50 on the basis of the extracted data of the peak portion, and a correct value of wall thickness information at a position corresponding to the peak portion. That is, the server 1 maps the data of the peak portion to which a correct value (a correct label representing a correct wall thickness) of the wall thickness information is applied in a feature space. Then, the server 1 sets any value k according to the k-nearest neighbor algorithm to construct a data set for estimating the wall thickness information from the data of the peak portion.

In a case of estimating the wall thickness information, the server 1 extracts data of the peak portion from the measurement data acquired from the terminal 2, and maps the data in a feature space. Then, the server 1 identifies k pieces of data (data of the peak portion to which the correct label is applied) located in the vicinity of a mapped position, and estimates the wall thickness information of the magnetic tube that is an estimation target from a correct value of the wall thickness information which is applied to the k pieces of data.

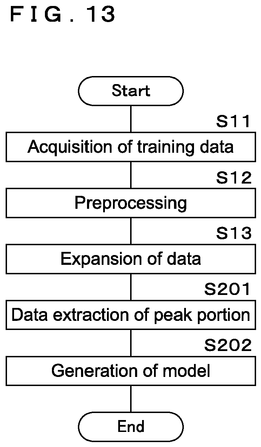

FIG. 13 is a flowchart illustrating a procedure of processing of generating the estimation model 50 according to Modification Example 1. After expanding the number of data of the measurement data (step S13), the server 1 executes the following processing. The control unit 11 of the server 1 extracts data of the peak portion corresponding to the thickness reduction portion from the measurement data of the magnetic characteristic values at respective positions of the magnetic tube along the longitudinal direction (step S201). Specifically, the control unit 11 specifies a base line from measurement data of the entirety of the magnetic tube, and extracts data of the peak portion where a difference from the base line is equal to or more than a predetermined threshold value.

The control unit 11 generates the estimation model 50 on the basis of the data of the peak portion which is extracted in step S201, and the correct value of the wall thickness information (step S202). Specifically, the control unit 11 generates a model according to the kNN. The control unit 11 maps the data of the peak portion to which a correct value (a correct label) of the wall thickness information is applied in a feature space, and sets any k value to generate a data set for estimating the wall thickness information from the data of the peak portion as the estimation model 50. The control unit 11 terminates a series of processing.

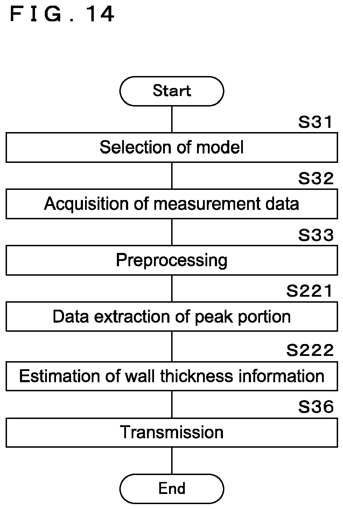

FIG. 14 is a flowchart illustrating a procedure of processing of estimating the wall thickness information according to Modification Example 1. After performing preprocessing on the measurement data (step S33), the server 1 executes the following processing. The control unit 11 of the server 1 extracts data of the peak portion corresponding to the thickness reduction portion from the measurement data of the magnetic characteristic values at respective positions of the magnetic tube along the longitudinal direction (step S221). Specifically, the control unit 11 specifies a base line from measurement data of the entirety of the magnetic tube, and extracts data of the peak portion where a difference from the base line is equal to or more than a predetermined threshold value. The control unit 11 inputs the extracted data of the peak portion to the estimation model 50 to estimate the wall thickness information of the thickness reduction portion (step S222). Specifically, the control unit 11 maps the data of the peak portion in a feature space, and estimates the wall thickness information of the thickness reduction portion of the magnetic tube that is an estimation target from a correct value of k pieces of wall thickness information located in the vicinity of a mapped portion. The control unit 11 transitions the processing to step S36.

As described above, according to Modification Example 1, it is also possible to estimate the wall thickness information in an original measurement data state without converting the measurement data into an image. Particularly, in this modification example, it is possible to appropriately estimate the wall thickness information of the thickness reduction portion by extracting data of the peak portion which corresponds to the thickness reduction portion.

### (Modification Example 2)

In this modification example, description will be given of an aspect in which the estimation model 50 is generated by using an ensemble learning method.

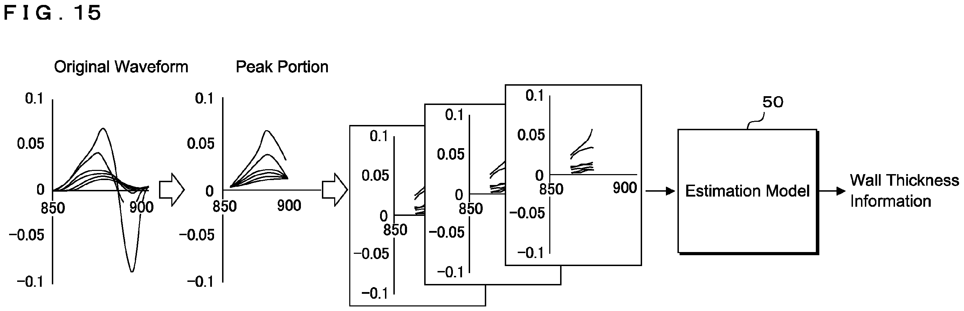

FIG. 15 is an explanatory view illustrating an overview of Modification Example 2. FIG, 15 illustrates an aspect in which data of a plurality of data sections obtained by further slightly shifting data sections having a predetermined length along the longitudinal direction of the magnetic tube is extracted from the data of the peak portion described in Modification Example 1, and the data of each section is input to the estimation model 50 to estimate the wall thickness information. The overview of this modification example will be described on the basis of FIG. 15.

In this modification example, the server 1 generates the estimation model 50 by using the ensemble learning method. Specifically, the server 1 generates a model according to a decision tree (for example, LightGBM) by using a gradient boosting method as the estimation model 50.

The gradient boosting is a kind of the ensemble learning, and is a method of generating a final model by sequentially generating a plurality of weak identifiers (models). The server 1 generates one weak identifier (decision tree) by using the training data, and generates a subsequent weak identifier on the basis of a residual between an estimation value obtained by the generated weak identifier and a correct value. The server 1 sequentially generates weak identifiers with reference to a gradient of loss function defined by the residual between the estimation value and the correct value so as to consider a learning result of a previous weak identifier, and generates a final identifier, that is, the estimation model 50.

Note that, in this modification example, the gradient boosting is used as the ensemble learning, but other ensemble learning methods such as bagging in which a plurality of weak identifiers are generated in parallel may be used. In addition, the ensemble learning may be applied to the estimation model 50 according to Modification Example 1, and the ensemble learning may be performed when generating a model such as kNN and SVM.

The server 1 may set the data of the peak portion described in Modification Example 1 (or measurement data of the entirety of the magnetic tube) as an input to the estimation model 50, but in this modification example, the peak portion is further partitioned per a data section having a predetermined length, and data of each data section is input to the estimation model 50.

FIG. 15 illustrates an aspect in which data of a plurality of data sections is extracted from the data of the peak portion. The data sections are sections of measurement points along the longitudinal direction of the magnetic tube, and are sections which constitute a part of the peak portion. For example, the server 1 sets 10 continuous measurement points as one data section. Note that, the number of the measurement points which constitute the data section is not limited to 10 points.

The server 1 sequentially shifts data sections set as an extraction target along the longitudinal direction, and extracts data of each of the data sections from the peak portion. For example, the server 1 extracts data of 10 points from an initiation portion of the peak portion where a difference from a base line is equal to or more than a threshold value as data of a first data section. The server 1 shifts an initiation point of a data section set as a measurement target by a predetermined number (for example, one), and extracts data of each data section. According to this, the server 1 extracts data of a plurality of the data sections from the data of one peak portion.

When estimating the wall thickness information with respect to one peak portion, the server 1 inputs the extracted data of the plurality of data sections to the estimation model 50 to estimate the wall thickness information. According to this, it is possible to estimate the wall thickness of the thickness reduction portion more appropriately.

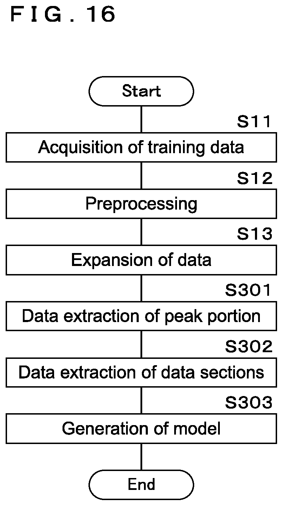

FIG. 16 is a flowchart illustrating a procedure of processing of generating the estimation model 50 according to Modification Example 2. After expanding the measurement data (step S13), the server 1 executes the following processing. The control unit 11 of the server 1 extracts data of the peak portion corresponding to the thickness reduction portion from measurement data of a total length of the magnetic tube which is measured along the longitudinal direction (step S301). Further, the control unit 11 extracts data of a plurality of data sections from the data of the peak portion (step S302). Specifically, the control unit 11 sequentially shifts data sections having a predetermined length which are set as an extraction target from an initiation point of the peak portion along the longitudinal direction, and extracts data of each of the data sections.

The control unit 11 generates the estimation model 50 on the basis of the data of the plurality of data sections which is extracted in step S302, and a correct value of wall thickness information at the peak portion (thickness reduction portion) (step S303). Specifically, the control unit 11 generates a decision tree by using the gradient boosting method. The control unit 11 generates one weak identifier (decision tree) by using training data (data of the plurality of sections and a correct value of the wall thickness information), and generates a subsequent weak identifier on the basis of a residual between an estimation value of wall thickness information obtained by the generated weak identifier and a correct value. The control unit 11 sequentially generates weak identifiers in correspondence with a gradient of loss function defined by the residual between the estimation value and the correct value, and generates a final identifier, that is, the estimation model 50. The control unit 11 terminates a series of processing.

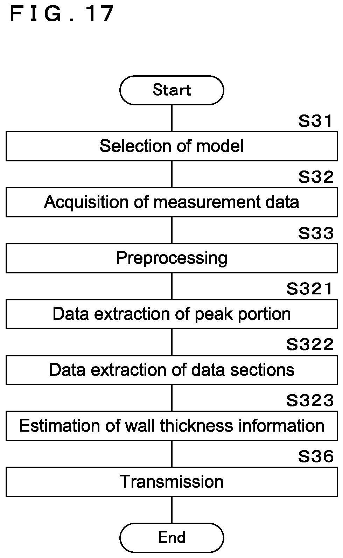

FIG. 17 is a flowchart illustrating a procedure of processing of estimating the wall thickness information according to Modification Example 2. After performing preprocessing on the measurement data (step S33), the server 1 executes the following processing. The control unit 11 of the server 1 extracts data of the peak portion corresponding to the thickness reduction portion from measurement data of magnetic characteristic values at respective positions along the longitudinal direction (step S321). The control unit 11 extracts data of a plurality of data sections from the data of the peak portion (step S322). The control unit 11 inputs the extracted data of the plurality of data sections to the estimation model 50 to estimate the wall thickness information of the thickness reduction portion (step S323). The control unit 11 transitions the processing to step S36.

As described above, according to Modification Example 2, it is also possible to generate the estimation model 50 by using the ensemble learning according to the gradient boosting. In addition, the data of the peak portion is divided into data of the plurality of data sections and is input to the estimation model 50, and thus it is possible to estimate the wall thickness information of the peak portion (thickness reduction portion) more appropriately.

### (Modification Example 3)

Description will be given of an example in which an ensemble learning method different from Modification Example 2. As typical ensemble learning, it is known that the same data set is input to a plurality of models different in a learning mechanism, and an average of outputs from the plurality of models, or a majority output from the plurality of models is set as a learning result.

In Modification Example 3, differently from the learning, data to be input is divided into a plurality of sets, the respective divided sets are respectively input to other corresponding models, outputs of the corresponding models are further input other models, and outputs of the other models are set as a learning result.

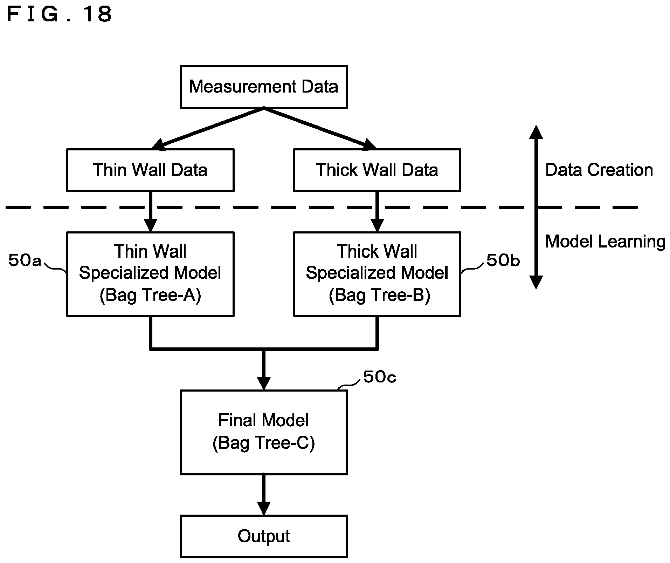

FIG. 18 is an explanatory view illustrating an overview of Modification Example 3. As illustrated in FIG. 18, an estimation model in Modification Example 3 includes a thin wall specialized model 50a (Bag Tree-A) trained mainly based on the measurement data and wall thickness information in which a residual wall thickness of the magnetic tube is smaller than a predetermined value, a thick wall specialized model 50b (Bag Tree-B) trained mainly based on the measurement data and wall thickness information in which the residual thickness of the magnetic tube is larger than the predetermined value, and a final model 50c (Bag Tree-C) in which outputs of the thin wall specialized model 50a and the thick wall specialized model 50b are set as an input.

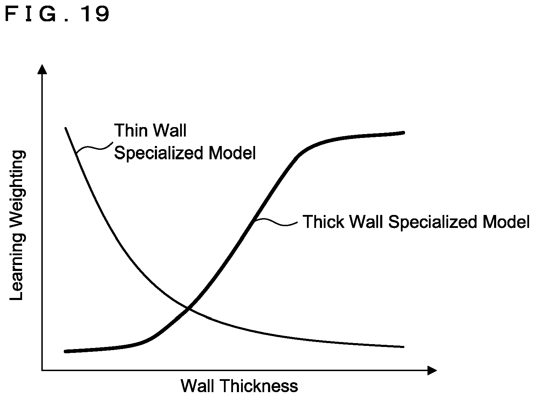

For example, the thin wall specialized model 50a is a model for 90% of data with a thickness of 0.1 to 0.8 mm, and 10% of data with a thickness exceeding 0.8 mm among all pieces of data, and the thick wall specialized model 50b is a model for remaining data that is not used by the thin wall specialized model 50a among the all pieces of data. A weighting relationship for both the models 50a and 50b in this example is illustrated in FIG. 19.

Note that, a reference thickness for classifying the thin wall specialized model 50a and the thick wall specialized model 50b is set to 0.8 mm, but the reference thickness value is not illustrative only, and other numerical values may be employed. In addition, it is assumed that 90% of data with a thickness equal to or less than a predetermined value, and 10% of data with a thickness exceeding a predetermined value are employed as a target of the thin wall specialized model 50a, but a ratio of 90%: 10% is illustrative only, and may be other ratios.

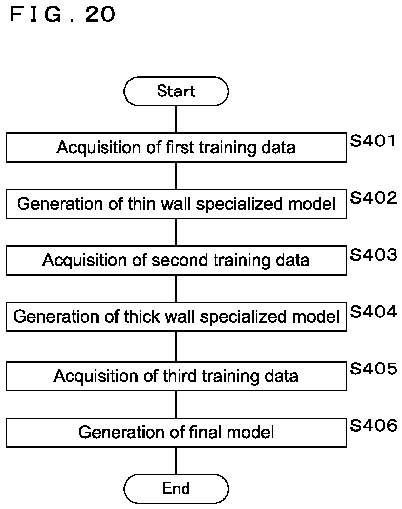

**FIG.** 20 is a flowchart illustrating a procedure of processing of generating estimation models (the thin wall specialized model 50a and the thick wall specialized model 50b, and the final model 50c) in Modification Example 3. The control unit 11 of the server 1 acquires first training data including measurement data mainly at a thin wall as described above among a plurality of pieces of measurement data of the magnetic tube, and a correct value of wall thickness information associated with the measurement data (step S401). The control unit 11 generates the thin wall specialized model 50a that estimates first thickness information in a case where the measurement data is input on the basis of the acquired first training data (the measurement data and the correct value of the wall thickness information) (step S402).

The control unit 11 acquires second training data including measurement data mainly at a thick wall as described above among the plurality of pieces of measurement data of the magnetic tube, and a correct value of wall thickness information associated with the measurement data (step S403). The control unit 11 generates the thick wall specialized model 50b that estimates and outputs second thickness information in a case where the measurement data is input on the basis of the acquired second training data (the measurement data and the correct value of the wall thickness information) (step S404).

The control unit 11 acquires third training data including the first wall thickness information output from the thin wall specialized model 50a, the second wall thickness information output from the thick wall specialized model 50b, and the correct value of the associated wall thickness information (step S405). The control unit 11 generates the final model 50c that estimates the wall thickness information and outputs the wall thickness information in a case where the first wall thickness information and the second wall thickness information are input on the basis of the acquired third training data (the first wall thickness information, the second wall thickness information, and the correct value of the wall thickness information) (step S406).

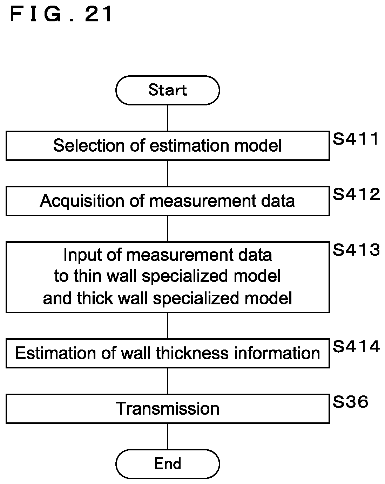

FIG. 21 is a flowchart illustrating a procedure of processing of estimating the wall thickness information in Modification Example 3. The control unit 11 of the server 1 accepts a selection input of the estimation models (the thin wall specialized model 50a, the thick wall specialized model 50b, and the final model 50c) employed in estimation of the wall thickness information from the terminal 2 (step S411). Specifically, the control unit 11 accepts a designation input for designating a boundary value of the wall thickness for dividing the thin wall model and the thick wall model, a ratio of the thick wall included in the thin wall model, and the like. The control unit 11 selects estimation models (the thin wall specialized model 50a, the thick wall specialized model 50b, and the final model 50c) corresponding to the designation input.

The control unit 11 acquires measurement data of the magnetic tube from the terminal 2 (step S412). The control unit 11 inputs the acquired measurement data to the thin wall specialized model 50a and the thick wall specialized model 50b (step S413). Next, the control unit 11 inputs an output from the thin wall specialized model 50a and an output from the thick wall specialized model 50b to the final model 50c to estimate the wall thickness information of the magnetic tube (step S414). The control unit 11 transmits the estimated wall thickness information to the terminal 2 (step S36), and terminates a series of processing.

Note that, in Modification Example 3, an average of the output from the thin wall specialized model 50a and the output from the thick wall specialized model 50b may be obtained without using the final model 50c, and the obtained average value may be set as the estimated wall thickness information of the magnetic tube.

According to Modification Example 3, since different appropriate models are applied to the thin wall side and the thick wall side, it is possible to estimate more accurate wall thickness information. Generally, the amount of data may be small on the thin wall side in many cases, but in any case, it is possible to improve estimation accuracy in the wall thickness information on the thin wall side where the amount of data is small.

### (Modification Example 4)

Modification Example 4 is an example relating to a method of correcting measurement data that is used in learning of the estimation model by using a dynamic time warping method in order to reduce an influence of a hall element voltage due to disturbance of a magnetic flux in the MFR method.

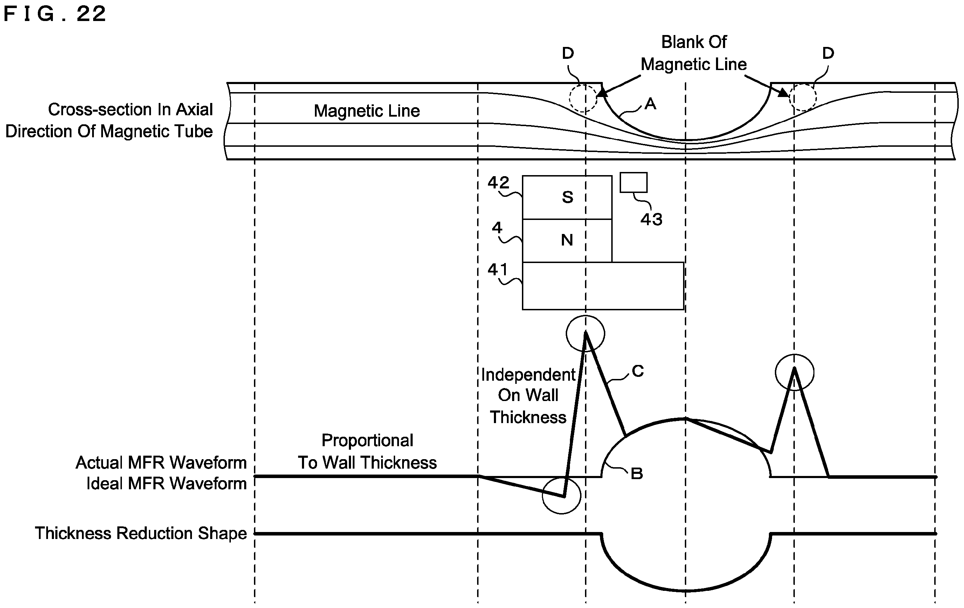

First, the influence of the hall element voltage due to disturbance of the magnetic flux in the MFR method will be described. FIG. 22 is an explanatory view illustrating the influence. As shown in a cross-sectional view of the magnetic tube in FIG. 22, deep local thickness reduction A is generated in the magnetic tube. In a case where the inside of the magnetic tube is scanned with the inspection probe 4 according to the MFR method, an MFR waveform to be detected by the hall element 43 ideally becomes a waveform B in correspondence with a variation of a thickness reduction shape. However, an MFR waveform that is actually detected becomes like a waveform C, and thus a site that is independent of the wall thickness (particularly, a site surrounded by O) may appear in the vicinity of a thickness reduction portion. The reason for this is because magnetic lines of force are distorted at the periphery of the thickness reduction portion and thus a blank region (region surrounded by broken line D) of the magnetic lines of forces occurs as illustrated in the cross-sectional view of the magnetic tube.

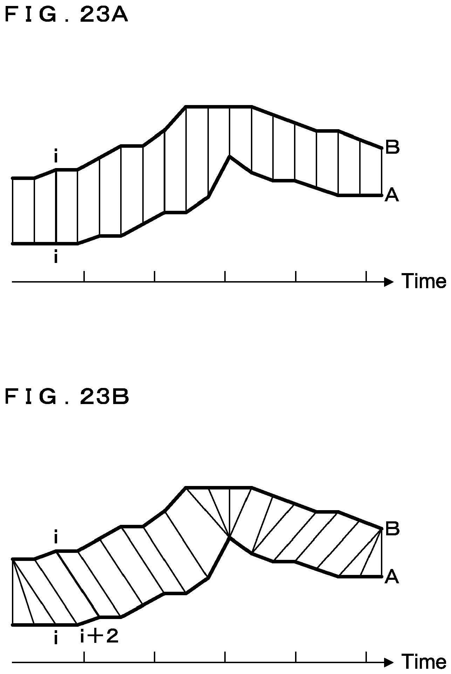

To solve the above-described problem, measurement data that is used in learning of the estimation model is corrected by using the dynamic time warping method. FIGS. 23A and 23B are explanatory views illustrating an overview of the dynamic time warping method in Modification Example 4. In FIGS. 23A and 23B, a represents a time-series waveform of measurement data (detected voltage), specifically, a time-series waveform of a value (in a case of eight channels, a value obtained by dividing the sum of a voltage value of a channel where the detection voltage is the maximum and voltage values of two channels on both sides of the channel by eight) obtained by a 3-peak method, b represents a time-series waveform of a wall thickness value as an actually measured target variance.

In Modification Example 4, as illustrated in FIG. 23B, a time-series point of the three-peak value (waveform a) and a time-series point of the actually measured wall thickness value (waveform b) are associated so that the sum of a Euclidean distance between the three-peak value (measurement data) and the actually measured wall thickness value (wall thickness information) becomes the minimum. For example, a time-series point i of the waveform b varies in correspondence with a time-series point i+2 shifted by two points from the waveform a.

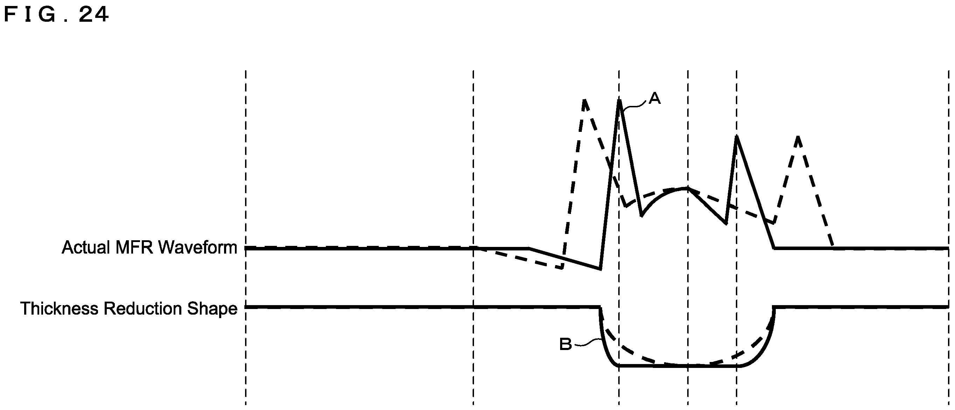

FIG. 24 is a view illustrating estimation results of the wall thickness information by inputting the measurement data to the estimation model that is trained by using the measurement data corrected as described above. In FIG. 24, the waveform A represents actual measurement data (MFR waveform), and thickness reduction shape B represents estimated wall thickness information (thickness reduction shape). Note that, FIG. 24 illustrates an actual MFR waveform (corresponding to a waveform C in FIG. 22) in a case where the dynamic time warping method is not used by a broken line in a state of being superimposed on the waveform A. In addition, an actual thickness reduction shape (corresponding to the thickness reduction shape shown in FIG. 22) is illustrated by a broken line in a state of being superimposed on the estimated thickness reduction shape B.

In Modification Example 4, since the measurement data that is used in learning of the estimation model is corrected by using the dynamic time warping method, it is possible to reduce an influence of the hall element voltage due to distortion of a magnetic flux in the above-described MFR method, and it is possible to estimate the thickness reduction shape of the magnetic tube with high accuracy.

### (Modification Example 5)

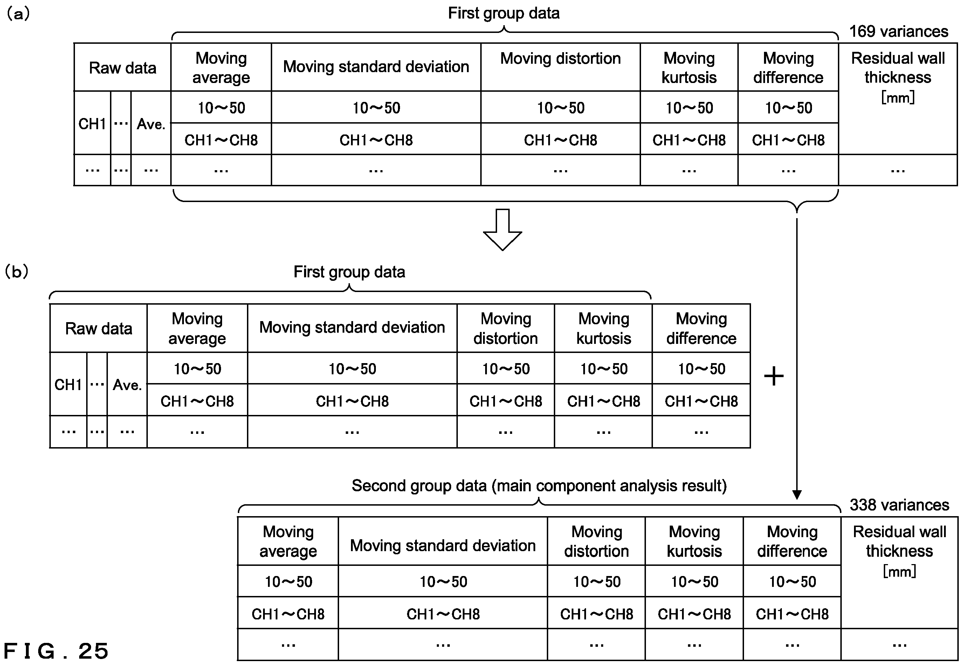

Modification Example 5 is an example of increasing the number of data by using the main component analysis method. FIG. 25 is an explanatory view relating to data expansion processing in Modification Example 5.

The server 1 may use raw measurement data measured by the inspection probe 4 including eight channels (CH1 to CH8), and first group data obtained by performing preprocessing including arithmetic operation processing on the raw measurement data (including a moving average of a plurality of positions (10 to 50 points) along the longitudinal direction of the magnetic tube, a moving standard deviation, the degree of moving distortion, moving kurtosis, and a moving difference in the example shown in FIG. 25) as an input to the estimation model 50 (refer to FIG. 25(a)), but in Modification Example 5, in addition to the raw measurement data and the first group data, second group data obtained by executing main component analysis on the raw measurement data and the first group data is used as in input to the estimation model 50 in order to improve estimation accuracy of the wall thickness information. (refer to FIG. 25(b)).

Note that, in the example shown in FIG. 25, it is assumed that the first group data and the second group data are the moving average, the moving standard deviation, the degree of moving distortion, the moving kurtosis, and the moving difference, but there is no limitation thereto. In addition, it is assumed that the second group data and the first group data have the same kind of data configuration, but data configuration of both the groups may be different from each other.

In Modification Example 5, since the number of data is increased by also adding the main component analysis results (in the example shown in FIG. 25, the number of data increases from 169 variances to 338 variances), it is possible to improve the estimation accuracy of the wall thickness information.

### (Embodiment 2)

In Embodiment 1, description has been given of the defect estimation system that estimates defects such as the thickness reduction of the magnetic tube by using the estimation model 50. In this embodiment, description will be given of an embodiment when a user performs inspection for defects of the magnetic tube by actually using this system.

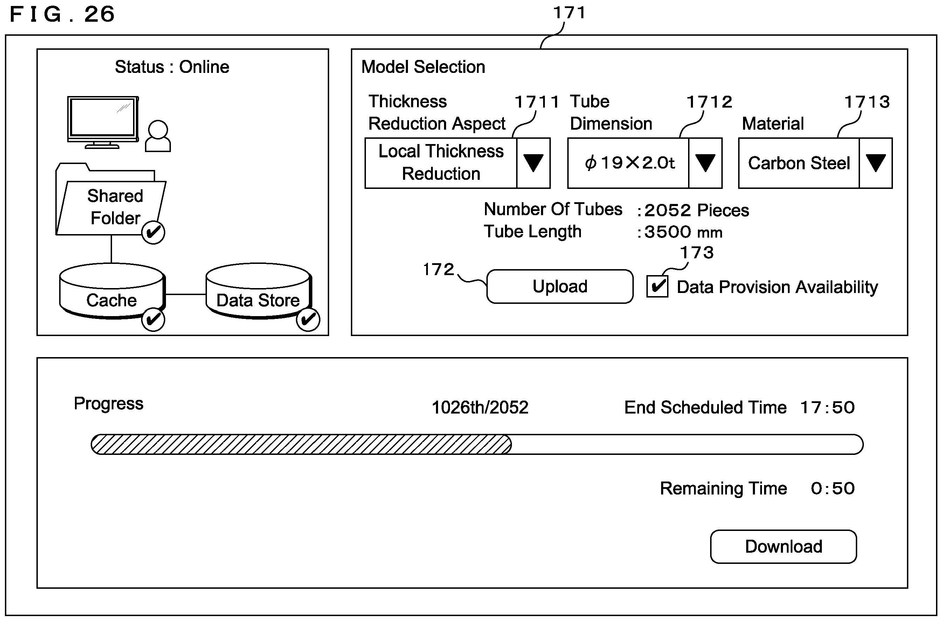

FIG. 26 is an explanatory view illustrating an example of a measurement data upload screen. FIG. 26 illustrates a display screen when the terminal 2 transmits (uploads) measurement data to the server 1. The upload screen includes a model selection column 171, an upload button 172, and provision availability selection column 173.

The model selection column 171 is an input column for selecting the estimation model 50 that is used for estimation of wall thickness information, and is an input column for accepting a designation input of magnetic tube information relating to the magnetic tube that is an estimation target (measurement target). For example, the model selection column 171 includes a thickness reduction aspect designation column 1711, a dimension designation column 1712, and a material designation column 1713. The terminal 2 accepts designation inputs of a thickness reduction aspect, dimensions, and a material of the magnetic tube through the respective designation columns.

The upload button 172 is a button for transmitting (uploading) measurement data to the server 1. In a case of accepting an operation input to the upload button 172, the terminal 2 transmits the measurement data to the server 1.

The provision availability selection column 173 is an input column for selecting provision (usage) availability of the measurement data to this system. The terminal 2 accepts a selection input according to provision availability of the measurement data in correspondence with an operation input to the provision availability selection column 173. In a case of accepting a selection input indicating provision of the measurement data, the server 1 stores the measurement data acquired from the terminal 2 in the measurement DB 143. As to be described later, the measurement data provided from a user is used for relearning (updating) of the estimation model 50.

Note that, the measurement data acquired from each terminal 2 may be used for relearning of the estimation model 50 regardless of presence or absence of provision availability selection.

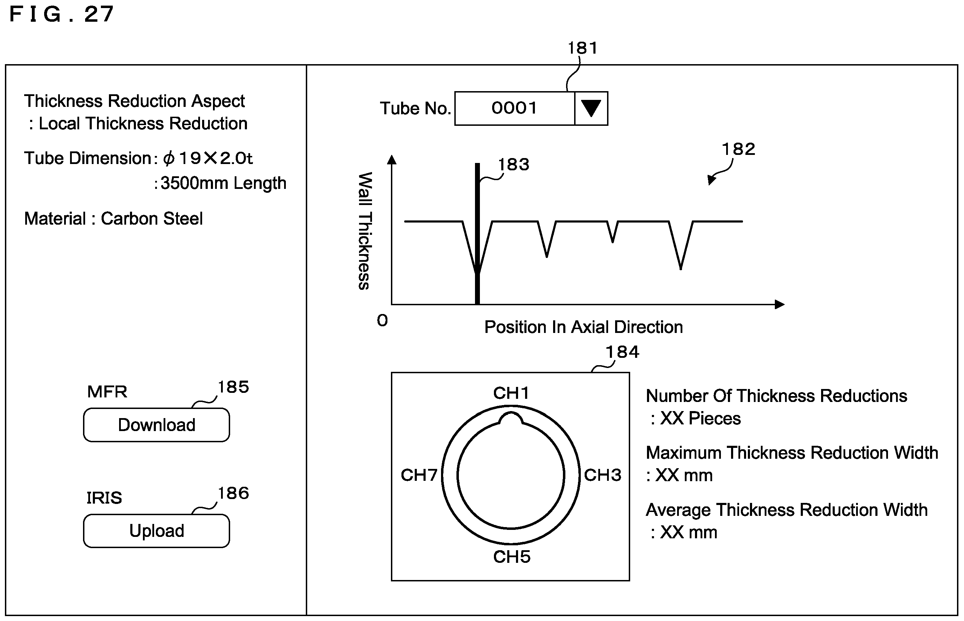

FIG. 27 is an explanatory view illustrating an example of a wall thickness information display screen. FIG. 27 illustrates a display screen of wall thickness information estimated on the basis of the estimation model 50. The screen includes a magnetic tube selection column 181, a wall thickness graph 182, a cross-sectional image 184, a download button 185, and a second measurement data upload button 186.

The magnetic tube selection column 181 is an input column for selecting a magnetic tube of which wall thickness information is to be displayed. The terminal 2 displays wall thickness information of the magnetic tube selected in the magnetic tube selection column 181.

The wall thickness graph 182 is a graph showing wall thickness, which is estimated on the basis of the estimation model 50, of each portion of the magnetic tube. In the wall thickness graph 182, the horizontal axis represents a position of the magnetic tube in the longitudinal direction, and the vertical axis represents wall thickness. For example, the terminal 2 displays an average value of the wall thickness of each channel in the wall thickness graph 182. Note that, the terminal 2 may display the wall thickness for every channel in the wall thickness graph 182.

The cross-sectional image 184 is an image simulating a cross-section orthogonal to the magnetic tube longitudinal direction, and is an image that reproduces the wall thickness at each position on the cross-section in correspondence with the wall thickness information. As described above, the server 1 estimates the wall thickness at each channel (each position on the cross-section) at each position of the magnetic tube along the longitudinal direction. The server 1 compares the estimated wall thickness (a base line of the wall thickness graph 182) of each channel and wall thickness of a sound portion with each other to detect a thickness reduction portion where the thickness is smaller than that of the sound portion. In addition, the server 1 calculates a thickness reduction width that is a difference in the wall thickness between the sound portion and the thickness reduction portion. For example, the terminal 2 displays a cross-section of the magnetic tube in which CH1 is set to a 0 o'clock direction, and reproduces and displays the thickness reduction portion (concave portion) corresponding to the calculated thickness reduction width at a position corresponding to a channel (CH1 in FIG. 27) where the thickness reduction portion is detected.

For example, the terminal 2 displays a line 183 on the wall thickness graph 182. The terminal 2 accepts a designation input for designating a position of the magnetic tube of which the cross-sectional image 184 is displayed in the longitudinal direction by accepting an operation of moving the line 183 along the horizontal axis. The terminal 2 displays the cross-sectional image 184 of the magnetic tube which corresponds to the position of the line 183.

In addition, the terminal 2 displays the number of the thickness reduction portions, a maximum value of the thickness reduction width, an average value, and the like which are detected on the basis of the wall thickness information.

Note that, the wall thickness display screen illustrated in FIG. 27 is an illustrative only, and this embodiment is not limited thereto. For example, the terminal 2 may display only the wall thickness at each position inside the magnetic tube as in the wall thickness graph 182. In addition, for example, when displaying the wall thickness at each position inside the magnetic tube in the wall thickness graph 182 or the like, the terminal 2 may change a display aspect (for example, a display color) of the wall thickness at each position in correspondence with reliability of a wall thickness estimation result (probability value representing certainty of the estimation result) by the estimation model 50. In addition, for example, in a case of detecting a plurality of thickness reduction portions from the wall thickness information, the terminal 2 may list a plurality of cross-sectional images 184, 184, 184, ... corresponding to the thickness reduction portions. In this manner, the wall thickness information display aspect is not limited to the aspect illustrated in FIG. 27.

In addition, in this embodiment, it is assumed that the terminal 2 displays the wall thickness information on a dedicated screen, but the terminal 2 may only download a file (for example, a CSV file) storing the wall thickness information estimation result, and may not display the wall thickness information.

The download button 185 is a button for downloading the file storing the wall thickness information estimation result. In a case of accepting an operation input to the download button 185, the terminal 2 acquires the file storing wall thickness information estimation result from the server 1.

The second measurement data upload button 186 is a button for uploading second measurement data that is measurement data other than the above-described measurement data (measurement data based on magnetic flux resistance) to the server 1. In a case of accepting an operation input to the second measurement data upload button 186, the terminal 2 transmits measurement data obtained by an internal rotary inspection system (IRIS) to the server 1 as the second measurement data. The second measurement data will be described later.

As described above, the server 1 acquires the measurement data of the magnetic tube from the terminal 2 of each user, and estimates the wall thickness information. Then, the server 1 transmits the wall thickness information to the terminal 2 that is an acquisition source of the measurement data, and displays the wall thickness information on the terminal 2. In this embodiment, the server 1 performs relearning on the basis of the measurement data acquired from the terminal 2, and updates the estimation model 50.

Specifically, in a case of accepting a selection input indicating provision of the measurement data by the provision availability selection column 173, the server 1 stores the measurement data acquired from the terminal 2 in the measurement DB 143. The server 1 uses the measurement data stored in the measurement DB 143 as training data for relearning. The server 1 updates the estimation model 50 on the basis of the measurement data stored in the measurement DB 143, and a correct value of the wall thickness information corresponding to the measurement data.

For example, the correct value of the wall thickness information at the time of the relearning may be manually set through the screen in FIG. 27 by a user, but in this embodiment, the second measurement data provided from the user is used as the correct value. The second measurement data is data obtained by measuring the wall thickness at each position inside the magnetic tube, and is, for example, measurement data according to the IRIS.

The IRIS is a method of inspecting the wall thickness of the tube (magnetic tube) by using ultrasonic waves, and measures the wall thickness by inserting a probe provided with an ultrasonic probe into the tube filled with water, and by detecting a reflected wave of an ultrasonic beam generated from the probe by using the ultrasonic probe. The IRIS is known, and thus detailed description will be omitted in this embodiment. In the IRIS, an inspection speed is slower in comparison to the inspection method such as the magnetic flux resistance according to this embodiment, RFECT, and MFL which use magnetic characteristics, but measurement accuracy is relatively high.

In this embodiment, in a case of being provided with measurement data according to the IRIS from a user, the server 1 uses the data as the correct value of the wall thickness information. That is, the server 1 sets a pair of the measurement data based on the magnetic flux resistance and the second measurement data based on the IRIS as the training data for relearning.

The server 1 compares an estimation value of the wall thickness information based on the measurement data provided from a user, and the wall thickness indicated by the second measurement data, that is, the correct value with each other. Then, the server 1 updates parameters such as a weight between neurons so that both the values approximate each other. The server 1 performs relearning with respect to the measurement data of the magnetic tube which is provided from the user, and updates the estimation model 50.

The server 1 may cause one estimation model 50 to relearn the measurement data of all users, but it is preferable that the estimation model 50 separately learns measurement data acquired from the terminal 2 of each user, and updates the estimation model 50 for every user. That is, the server 1 separately applies the measurement data provided from each user to the estimation model 50, and constructs the estimation model 50 for each user. According to this, it is possible to individually tune the estimation model 50 in correspondence with a tendency of the magnetic tube for which measurement (inspection) is performed by each user.

As described above, it is possible to improve the estimation accuracy of the estimation model 50 through the operation of this system.

The server 1 imposes a usage fee (charge) for the estimation model 50 on each user who uses this system. The usage fee may be, for example, a fixed amount (subscription) for each certain period, but in this embodiment, the usage fee is determined in correspondence with the amount of calculation in the processing of estimating the wall thickness information based on the estimation model 50. For example, the amount of calculation that becomes a reference of the usage fee determination may be the number of times of estimation of the wall thickness information (the number of magnetic tubes), a calculation time necessary for the estimation processing, the amount of data of the measurement data, or the like. In a case of estimating the wall thickness information by acquiring the measurement data from the terminal 2, the server 1 determines the usage fee imposed on the user in correspondence with the amount of calculation in the estimation. The server 1 stores the determined usage fee in the user BD 141, and finally charges the user the usage fee.

In this embodiment, the server 1 changes the usage fee in correspondence with presence or absence of provision (usage) of the measurement data. Specifically, in a case of being provided with measurement data (measurement data based on the magnetic flux resistance) that is a source of the wall thickness information estimation, the server 1 decreases the usage fee. In addition, in a case of being provided with the second measurement data (measurement data based on the IRIS) corresponding to the measurement data, the server 1 further decrease the usage fee. According to this, it is possible to efficiently perform collection of the training data for relearning.

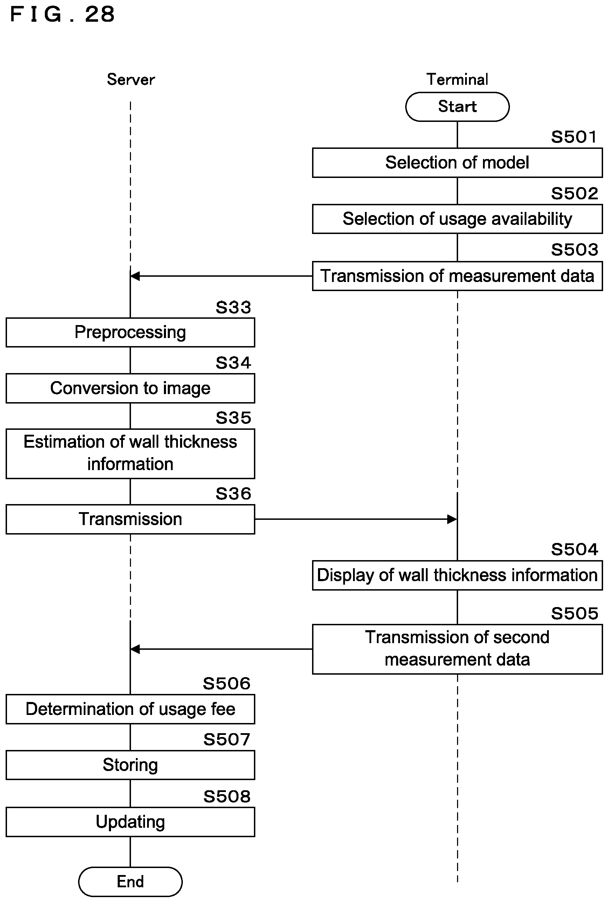

FIG. 28 is a flowchart illustrating a procedure of processing of estimating wall thickness information according to Embodiment 2. Processing contents of the server 1 and the terminal 2 according to this embodiment will be described on the basis of FIG. 28.

The control unit 21 of the terminal 2 accepts a selection input of the estimation model 50 that uses the wall thickness information for estimation (step S501). Specifically, the control unit 21 accepts a designation input of magnetic tube information relating to a magnetic tube such as a thickness reduction aspect, dimensions, a material, and the like of the magnetic tube which are set as an estimation target. In addition, the control unit 21 accepts measurement data usage (provision) availability selection input related to updating of the estimation model 50 (step S502). The control unit 11 transmits measurement data of the magnetic tube to the server 1 in combination with the selection contents in steps S501 and S502 to the server 1 (step S403). In a case of acquiring the measurement data from the terminal 2, the control unit 11 of the server 1 executes processing in steps S33 to S35, and transmits wall thickness information estimated on the basis of the estimation model 50 to the terminal 2 (step S36).

In a case of acquiring the wall thickness information from the server 1, the control unit 21 of the terminal 2 displays the estimated wall thickness information on the display unit 24 (step S504). Specifically, the control unit 21 displays the wall thickness at each position (portion) of the magnetic tube along the longitudinal direction by the wall thickness graph 182, or the like, and displays the wall thickness at each position (channel) on a cross-section at any position in the longitudinal direction by the cross-sectional image 184 or the like.

The control unit 21 transmits the second measurement data obtained by measuring the wall thickness of the magnetic tube by a method other than the magnetic flux resistance to the server 1 in correspondence with an operation input from a user (step S505). For example, the second measurement data is measurement data according to the IRIS, and is data obtained by inserting a probe provided with an ultrasonic probe into the magnetic tube filled with water, and by detecting a reflected wave of an ultrasonic beam generated from the probe by using the ultrasonic probe.

After executing the processing in step S36, the control unit 11 of the server 1 determines a usage fee (charge) imposed on the user (step S506). Specifically, the control unit 11 determines the usage fee in correspondence with the amount of calculation (the number of times calculation, a calculation time, the amount of data of measurement data, and the like) of processing of estimating the wall thickness information based on the estimation model 50. Further, the control unit 11 decreases the usage fee in correspondence with presence or absence of provision of the measurement data and the second measurement data (usage or acquisition).

In a case of accepting a selection input indicating that the measurement data can be provided from a user, the control unit 11 stores the measurement data transmitted in step S403 in the measurement DB 143 (step S507). Further, in a case where the second measurement data is transmitted in step S405, the control unit 11 stores the second measurement data in the measurement DB 143 in association with the measurement data.

The control unit 11 updates the estimation model 50 on the basis of the measurement data and the second measurement data stored in the measurement DB 143 (step S508). That is, the control unit 11 sets the measurement data measured by a user as input data for training, uses a measurement value of the wall thickness in the second measurement data as a correct value of the wall thickness information, and updates parameters such as a weight between neurons. For example, the control unit 11 individually learns the measurement data acquired from the terminal 2 of each user, and updates the estimation model 50 for each user. The control unit 11 terminates a series of processing.

As described above, according to Embodiment 2, this system can be appropriately implemented, and the estimation model 50 can be optimized through the operation of this system.

The embodiments are illustrative only in all aspects, and it should be considered that the embodiments are not restrictive. The scope of the invention is indicated by the appended claims rather than the above-described meaning, and includes all modifications within the meaning and ranges equivalent to the appended claims.

### [Description of Reference Numerals]

- 1: Server (information processing device)
- 11: Control unit
- 12: Main storage unit
- 13: Communication unit
- 14: Auxiliary storage unit
- Pl: Program
- 142: Model DB
- 143: Measurement DB
- 2: Terminal (user terminal)
- 21: Control unit
- 22: Main storage unit
- 23: Communication unit
- 24: Display unit
- 25: Input unit
- 26: Auxiliary storage unit
- P2: Program
- 3: Measurement device
- 4: Inspection probe
- 41: Yoke
- 42: Magnet
- 43: Hall element (magnetic sensor)
- 50: Estimation model
- 50a: Thin wall specialized model
- 50b: Thick wall specialized model
- 50c: Final model

## Claims

1. An information processing method in which a computer executes:
processing of acquiring measurement data obtained by measuring magnetic characteristic values of a magnetic tube; and
processing of estimating wall thickness information by inputting the acquired measurement data to a model trained for estimating the wall thickness information relating to the wall thickness of the magnetic tube in a case where the measurement data is input.

2. The information processing method according to claim 1,
wherein the magnetic characteristic values are measurement values measured by using an inspection probe including a magnet that generates a magnetic field, a yoke that is disposed on an opposite side of the magnetic tube with respect to the magnet, and a magnetic sensor that is disposed between the yoke and the magnetic tube and measures a magnetic flux density passing through the yoke, the magnet, and the magnetic tube, and is an output voltage of the magnetic sensor which is proportional to the magnetic flux density.

3. The information processing method according to claim 2,
wherein the measurement data is data obtained by measuring the magnetic characteristic values at respective positions where a cross-section of the magnetic tube is equally divided along a peripheral direction at respective positions of the magnetic tube having a cylindrical shape along a longitudinal direction by using the inspection probe in which the magnet and the magnetic sensor are periodically attached onto an outer periphery of the yoke,
the magnetic characteristic values are normalized so that the magnetic characteristic values at the outside of the magnetic tube match each other at all positions along the peripheral direction, and the magnetic characteristic values at sound portions of the magnetic tube where thickness reduction does not occur match each other at all positions along the peripheral direction, and
the measurement data obtained by normalizing the magnetic characteristic values is input to the model to estimate the wall thickness information.

4. The information processing method according to claim 2 or 3,
wherein the measurement data is data obtained by measuring the magnetic characteristic values at the respective positions where the cross-section of the magnetic tube having a cylindrical shape is equally divided along the peripheral direction by using the inspection probe in which the magnet and the magnetic sensor are periodically attached onto an outer periphery of the yoke,
the magnetic characteristic values at the respective positions are corrected to values in a case where the inspection probe passes a central axis of the magnetic tube, and
the measurement data in which the magnetic characteristic values are corrected is input to the model to estimate the wall thickness information at the respective positions.

5. The information processing method according to any one of claims 2 to 4,
wherein the measurement data is data obtained by measuring the magnetic characteristic values at respective positions where a cross-section of the magnetic tube is equally divided along a peripheral direction at respective positions of the magnetic tube having a cylindrical shape along a longitudinal direction by using the inspection probe in which the magnet and the magnetic sensor are periodically attached onto an outer periphery of the yoke,
an average value, a standard deviation, the degree of distortion, or kurtosis of the magnetic characteristic values along the longitudinal direction or the peripheral direction is calculated from the magnetic characteristic values at the respective positions in the longitudinal direction or the peripheral direction, and
the measurement data to which the average value, the standard deviation, the degree of distortion, or the kurtosis is added is input to the model to estimate the wall thickness information.

6. The information processing method according to any one of claims 1 to 5,
wherein the measurement data is data obtained by measuring the magnetic characteristic values at respective positions of the magnetic tube along a longitudinal direction, and
the measurement data is input to the model to estimate the wall thickness information of respective portions obtained by partitioning the magnetic tube for a certain length along the longitudinal direction.

7. The information processing method according to claim 6,
wherein a moving average of the magnetic characteristic values along the longitudinal direction is taken to specify a base line of the measurement data,
data of a peak portion where a difference between the base line and the magnetic characteristic values is equal to or more than a predetermined threshold value is extracted from the measurement data, and
the extracted data of the peak portion is input to the model to estimate the wall thickness information of the peak portion.

8. The information processing method according to claim 7,
wherein data of respective data sections obtained by slightly shifting data sections having a predetermined length along the longitudinal direction is extracted from the measurement data, and
the extracted data of the respective data sections is input to the model to estimate the wall thickness information of the peak portion.

9. The information processing method according to any one of claims 1 to 8,
wherein the measurement data is data obtained by measuring the magnetic characteristic values at respective positions on a cross-section orthogonal to the longitudinal direction at respective positions of the magnetic tube along the longitudinal direction,
the measurement data is converted into an image in which a first axis of the image is set to a position along the longitudinal direction, a second axis of the image is set to a position on the cross-section, and pixel values of respective pixels are allocated in correspondence with the magnetic characteristic values at respective positions of the magnetic tube, and
the image is input to the model to estimate the wall thickness information.

10. The information processing method according to claim 9,
wherein a plurality of hue images in which exponentiation values of a plurality of patterns of magnetic characteristic values which are different each other in an exponent are allocated to hues different from each other are generated from the measurement data,
a synthetic image obtained by synthesizing the plurality of hue images is generated, and
the generated synthetic image is input to the model to estimate the wall thickness information.

11. The information processing method according to any one of claims 1 to 10,
wherein magnetic tube information relating to the magnetic tube that is a measurement target in the measurement data is acquired,
a model corresponding to the acquired magnetic tube information is selected among a plurality of the models trained by a plurality of pieces of different training data in correspondence with the magnetic tube information, and
the measurement data is input to the selected model to estimate the wall thickness information.

12. The information processing method according to any one of claims 1 to 11,
wherein the models include a first model trained mainly based on the measurement data and wall thickness information in which a residual wall thickness of the magnetic tube is smaller than a predetermined value, a second model trained mainly based on the measurement data and wall thickness information in which the residual wall thickness of the magnetic tube is larger than the predetermined value, and a third model trained to output wall thickness information in a case where the wall thickness information output from the first model and the wall thickness information output from the second model are input, and
the acquired measurement data is input to the first model and the second model, and outputs from the first model and the second model are input to the third model to estimate the wall thickness information.

13. The information processing method according to any one of claims 1 to 12,
wherein the measurement data is corrected so that the sum of a Euclidean distance between the measurement data and wall thickness information corresponding to the measurement data becomes the minimum, and
the model is trained on the basis of the measurement data after correction, and wall thickness information.

14. The information processing method according to any one of claims 1 to 13,
wherein the measurement data includes sensor data obtained from a plurality of sensors provided in a peripheral direction of the magnetic tube, first group data obtained by performing preprocessing including arithmetic operation processing on the sensor data, and second group data obtained by executing main component analysis on the sensor data and the first group data, and
the sensor data, the first group data, and the second group data are input to the model to estimate the wall thickness information.

15. A program causing a computer to execute:
processing of acquiring measurement data obtained by measuring magnetic characteristic values of a magnetic tube; and
processing of estimating wall thickness information by inputting the acquired measurement data to a model trained for estimating the wall thickness information relating to the wall thickness of the magnetic tube in a case where the measurement data is input.

16. An information processing device, comprising:
an acquisition unit that acquires measurement data obtained by measuring magnetic characteristic values of a magnetic tube; and
an estimation unit that estimates wall thickness information by inputting the acquired measurement data to a model trained for estimating the wall thickness information relating to the wall thickness of the magnetic tube in a case where the measurement data is input.

17. A model generation method in which a computer executes:
processing of acquiring training data associated with a correct value of wall thickness information relating to the wall thickness of a magnetic tube with respect to measurement data obtained by measuring magnetic characteristic values of the magnetic tube; and
processing of generating a trained model that estimates the wall thickness information in a case where the measurement data is input on the basis of the training data.

18. The model generation method according to claim 17,
wherein the measurement data is data obtained by measuring the magnetic characteristic values at respective positions where a cross-section of the magnetic tube having cylindrical shape is equally divided along a peripheral direction,
the positions on the cross-section of the magnetic tube where the magnetic characteristic values are measured are shifted along the peripheral direction to generate a plurality of patterns of measurement data from the training data, and
the trained model is generated by using the plurality of patterns of measurement data.

19. The model generation method according to claim 17 or 18,
wherein a plurality of patterns of the measurement data are generated from the training data by adding a plurality of patterns of predetermined noise, and
the trained model is generated by using the plurality of patterns of measurement data.

20. The model generation method according to any one of claims 17 to 19,
wherein the measurement data is data obtained by measuring the magnetic characteristic values at respective positions of the magnetic tube along a longitudinal direction,
a plurality of patterns of measurement data from the training data are generated by performing linear interpolation of the magnetic characteristic values between two points continuous along a longitudinal direction, and
the trained model is generated by using the plurality of patterns of measurement data.

21. The model generation method according to any one of claims 17 to 20,
first training data that mainly includes the measurement data and wall thickness information in which a residual wall thickness of the magnetic tube is smaller than a predetermined value is acquired,
a first model that outputs first wall thickness information in a case where the measurement data is input is generated on the basis of the acquired first training data,
second training data that mainly includes the measurement data and wall thickness information in which a residual wall thickness of the magnetic tube is larger than the predetermined value is acquired,
a second model that outputs second wall thickness information in a case where the measurement data is input is generated on the basis of the acquired second training data,
third training data that includes the first wall thickness information output from the first model, the second wall thickness information output from the second model, and the wall thickness information is acquired, and
a third model that outputs wall thickness information in a case where the first wall thickness information and the second wall thickness information are input is generated on the basis of the acquired third training data.

22. The model generation method according to any one of claims 17 to 21,
wherein the measurement data and the wall thickness information corresponding to the measurement data are acquired,
the measurement data is corrected so that the sum of a Euclidian distance between the acquired measurement data and the acquired wall thickness information becomes the minimum, and
the model is trained on the basis of the measurement data after correction and the wall thickness information.

23. An information processing method in which a computer executes:
processing of acquiring measurement data obtained by measuring magnetic characteristic values of a magnetic tube from each of user terminals connected for communication through a network;
processing of estimating wall thickness information by inputting the acquired measurement data to a model that is trained for estimating the wall thickness information relating to the wall thickness of the magnetic tube in a case where the measurement data is input; and
processing of transmitting the estimated wall thickness information to the user terminal that is an acquisition source of the measurement data.

24. The information processing method according to claim 23,
wherein the magnetic characteristic values are measurement values measured by using an inspection probe including a magnet that generates a magnetic field, a yoke that is disposed on an opposite side of the magnetic tube with respect to the magnet, and a magnetic sensor that is disposed between the yoke and the magnetic tube and measures a magnetic flux density passing through the yoke, the magnet, and the magnetic tube, and is an output voltage of the magnetic sensor that becomes lower as the magnetic flux density is larger.

25. The information processing method according to claim 23 or 24,
wherein a designation input of magnetic tube information relating to the magnetic tube that is a measurement target is accepted,
the model corresponding to the acquired magnetic tube information among a plurality of the models which have learned training data different in correspondence with the magnetic tube information is selected, and
the measurement data is input to the selected model to estimate the wall thickness information.

26. The information processing method according to any one of claims 23 to 25,
wherein the measurement data acquired from the user terminal is stored in a storage unit,
a correct value of the wall thickness information corresponding to the measurement data is acquired, and
the model is updated on the basis of the measurement data stored in the storage unit, and the correct value.

27. The information processing method according to claim 26,
wherein the model is updated by using the measurement data acquired from a user terminal of a user for every user who is an acquisition source of the measurement data.

28. The information processing method according to claim 26 or 27,
wherein in a case of estimating the wall thickness information, a usage fee of the model which is imposed on a user is determined in correspondence with the amount of calculation of the processing of estimating the wall thickness information using the model.

29. The information processing method according to claim 28,
wherein in a case where the measurement data is acquired from the user terminal, a selection input of usage availability of the measurement data according to updating of the model is accepted from a user,
in a case of accepting a selection input indicating that the measurement data is cable of being used, the measurement data is stored in the storage unit, and
the usage fee of the model which is imposed on the user is decreased in correspondence with usage availability of the measurement data.

30. The information processing method according to claim 28 or 29,
wherein second measurement data obtained by measuring the wall thickness of the magnetic tube by a measurement method different from a measurement method of the measurement data is acquired as second measurement data representing the correct value from the user terminal,
the model is updated on the basis of the measurement data and the second measurement data, and
the usage fee of the model which is imposed on the user is decreased in correspondence with presence or absence of acquisition of the second measurement data.

31. The information processing method according to claim 30,
wherein the second measurement data is measurement data obtained by an internal rotary inspection system.

32. An information processing device, comprising:
an acquisition unit that acquires measurement data obtained by measuring magnetic characteristic values of a magnetic tube from each of user terminals connected for communication through a network;
an estimation unit that estimates wall thickness information by inputting the acquired measurement data to a model that is trained for estimating the wall thickness information relating to the wall thickness of the magnetic tube in a case where the measurement data is input; and
a transmission unit that transmits the estimated wall thickness information to the user terminal that is an acquisition source of the measurement data.

33. A program that causes a computer to execute:
processing of acquiring measurement data obtained by measuring magnetic characteristic values of a magnetic tube from a measurement device;
processing of transmitting the measurement data to an information processing device that estimates wall thickness information by using a model that is trained for estimating the wall thickness information relating to the wall thickness of the magnetic tube in a case where the measurement data is input;
processing of acquiring the wall thickness information estimated by inputting the measurement data to the model from the information processing device; and
processing of displaying the acquired wall thickness information on a display unit.

34. The program according to claim 33,
wherein second measurement data obtained by measuring the wall thickness of the magnetic tube by a measurement method different from a measurement method of the measurement data is transmitted to the information processing device as second measurement data representing a correct value of the wall thickness information, and
the wall thickness information estimated by using the model that is updated on the basis of the measurement data and the second measurement data is acquired from the information processing device.

35. The program according to claim 33 or 34,
wherein the measurement data is data obtained by measuring the magnetic characteristic values at respective positions on a cross-section orthogonal to a longitudinal direction at respective positions of the magnetic tube along the longitudinal direction,
a graph showing the wall thickness at the respective positions along the longitudinal direction is displayed on the basis of the wall thickness information representing the wall thickness at the respective positions on the cross-section at the respective positions along the longitudinal direction,
a designation input for designating a position along the longitudinal direction is accepted on the graph, and
a cross-sectional image of the magnetic tube which reproduces the wall thickness at the respective positions on the cross-section at the designated position is displayed.
